# FASCICULE DE BREVET EUROPEEN

(11) **EP 3 150 354 B1**
(45) Date de publication et mention de la délivrance du brevet: **01.08.2018**
(21) Numéro de dépôt: 16191683.8
(22) Date de dépôt: 30.09.2016
(51) Int. Cl.: B29C 45/16, B29C 45/00, B29C 45/26, B29C 45/40

(54) **MOULE D'INJECTION À CHARGEUR DE TRANSFERT ET PROCÉDÉ D'INJECTION ASSOCIÉ**
SPRITZGUSSFORM MIT TRANSFERWECHSLER, UND ENTSPRECHENDES SPRITZGUSSVERFAHREN
INJECTION MOULD WITH TRANSFER LOADER AND ASSOCIATED INJECTION METHOD

(30) Priorité: 02.10.2015 FR 1559395
(43) Date de publication de la demande: 05.04.2017
(73) Titulaire: JP Grosfilley, 01100 Martignat (FR)
(72) Inventeur: GAUDIN, Philippe, 01100 Groissiat (FR)
(74) Mandataire: Chevalier, Renaud Philippe

(56) Documents cités:
- EP-A1- 1 060 868

## Description

La présente invention concerne le domaine des moules d'injection plastique et plus particulièrement les moules d'injection plastique rotatifs.

Classiquement, plus les pièces plastiques sont complexes (bi-matières, insert, complexité dans la forme) à réaliser plus on multiplie le nombre d'opérations d'injection succesives, voir par example le document EP 1 060 868 A1. Ainsi, en général dans un premier moule est réalisé par injection une préforme, ladite préforme étant ensuite transférée par robot dans un second moule pour une deuxième injection et ainsi de suite jusqu'à la formation de la pièce finie. Ce procédé est laborieux et rallonge les temps de cycle de production.

Par ailleurs, l'utilisation de robot de transfert de pièces est onéreux et requiert une main d'oeuvre et une maintenance différentes de celles des moules d'injection.

En outre, lorsque l'on transfère une préforme d'un moule à l'autre, l'accostage des préformes s'altère et on perd en précision.

L'invention a pour but de remédier à tout ou partie des inconvénients précités.

L'invention a pour objet un moule d'injection comprenant :
- au moins un premier poste pour l'injection d'une première partie de pièce,
- au moins un deuxième poste pour l'injection d'une deuxième partie de pièce,
- un premier chargeur comportant au moins une première empreinte de moulage, ledit premier chargeur étant mobile au moins en rotation entre le premier poste et une première zone de transfert et/ou d'assemblage,
- un deuxième chargeur comportant au moins une première empreinte de moulage, ledit deuxième chargeur étant mobile au moins en rotation entre le deuxième poste et une deuxième zone de transfert et/ou d'assemblage,
caractérisé en ce que le moule d'injection comprend au moins un chargeur de transfert, mobile au moins en rotation entre la première zone de transfert et/ou d'assemblage et la deuxième zone de transfert et/ou d'assemblage, ledit chargeur de transfert étant configuré pour transférer la première partie de pièce du premier chargeur sur le deuxième chargeur et/ou ledit chargeur de transfert étant configuré pour transférer la deuxième partie de pièce du deuxième chargeur sur le premier chargeur.

Grâce à l'invention, le transfert d'un poste d'injection à un autre est réalisé au sein d'un même moule d'injection, ce qui évite les transferts en moule ouvert d'une pièce, permettant ainsi, un gain de temps et de précision dans la formation de la pièce, et simplifiant la maintenance et évitant les déréglages.

Selon une caractéristique de l'invention, le chargeur de transfert comprend au moins une première empreinte de transfert conformée pour s'appairer dans la première zone de transfert et/ou d'assemblage avec la au moins une empreinte de moulage du premier chargeur de sorte à transférer la première partie de pièce du premier chargeur sur le chargeur de transfert ou inversement.

Selon une autre caractéristique de l'invention, la au moins une empreinte de transfert du chargeur de transfert est conformée pour s'appairer dans la deuxième zone de transfert et/ou d'assemblage avec la au moins une empreinte de moulage du deuxième chargeur de sorte à transférer la deuxième partie de pièce du chargeur de transfert sur le deuxième chargeur ou inversement.

Selon une caractéristique de l'invention, le premier chargeur comprend une pluralité d'empreintes de moulage.

Selon une caractéristique de l'invention, le deuxième chargeur comprend une pluralité d'empreintes de moulage, ce qui permet un moulage de plusieurs pièces en même temps.

Selon une caractéristique de l'invention, le chargeur de transfert comprend une pluralité d'empreintes de transfert.

Selon une caractéristique de l'invention, le moule d'injection comprend au moins un troisième chargeur.

Selon une caractéristique de l'invention, le moule d'injection comprend au moins un poste de refroidissement et/ou au moins un poste de réchauffement et/ou au moins un poste de pose d'insert et/ou au moins un poste d'encliquetage et/ou au moins un poste de soudure miroir et/ou au moins un poste de soudure par joint surmoulé et/ou au moins un poste de pose d'un décor et/ou au moins un poste de marquage laser.

Selon une caractéristique de l'invention, le premier chargeur est préférentiellement mobile en translation.

Selon une caractéristique de l'invention, le deuxième chargeur est préférentiellement mobile en translation.

Préférentiellement, le chargeur de transfert est configuré pour se déplacer en rotation et en translation.

Avantageusement, le déplacement en translation des premier et deuxième chargeurs et du chargeur de transfert permet le dégagement des chargeurs les uns par rapport aux autres afin de permettre la rotation de ces derniers.

Selon une caractéristique de l'invention, l'axe de rotation du premier chargeur, l'axe de rotation du deuxième chargeur et l'axe de rotation du chargeur de transfert sont alignés.

Alternativement, l'axe de rotation du premier chargeur est positionné angulairement par rapport à l'axe de rotation du deuxième chargeur. Plus particulièrement, les axes de rotation et de translation du premier chargeur et du chargeur de transfert sont alignés sur l'axe longitudinal X-X du moule d'injection ou sur un axe parallèle à l'axe longitudinal X-X et les axes de rotation et de translation du deuxième chargeur 6 et du chargeur de transfert sont alignés sur un axe Y-Y sécant à l'axe longitudinal X-X du moule d'injection.

Selon une caractéristique de l'invention, le moule d'injection comprend une première partie de moule et une deuxième partie de moule opposée à la première partie de moule, le premier chargeur, le deuxième chargeur et le chargeur de transfert étant agencés entre les première et deuxième partie de moule, et préférentiellement le chargeur de transfert étant positionné entre le premier chargeur et le deuxième chargeur.

Selon une caractéristique de l'invention, le chargeur de transfert étant positionné entre le premier chargeur et le deuxième chargeur.

Selon une caractéristique de l'invention, et dans une première configuration de positionnement du premier chargeur, du deuxième chargeur et du chargeur de transfert, le chargeur de transfert est agencé en dessous des premier et deuxième chargeurs. Plus particulièrement et selon une caractéristique de l'invention, le chargeur de transfert est agencé le plus proche de la première partie de moule par rapport aux premier et deuxième chargeurs

Ainsi, selon une caractéristique de l'invention, le chargeur de transfert est agencé en retrait par rapport à l'axe longitudinal X-X du moule d'injection et par rapport au premier chargeur et au deuxième chargeur, en direction de la première partie de moule du moule d'injection.

Alternativement, et selon une caractéristique de l'invention, le premier chargeur est positionné en retrait par rapport à l'axe longitudinal X-X du moule d'injection en direction de la deuxième partie de moule du moule d'injection et le deuxième chargeur est positionné en retrait par rapport à l'axe longitudinal X-X du moule d'injection en direction de la première partie de moule du moule d'injection.

Alternativement et selon une caractéristique de l'invention, le chargeur de transfert est agencé en retrait par rapport à l'axe longitudinal X-X du moule d'injection et par rapport au premier chargeur et au deuxième chargeur, en direction de la deuxième partie de moule du moule d'injection.

L'invention porte également sur un procédé d'injection mis en oeuvre par un moule d'injection selon l'invention, ledit procédé d'injection comprenant au moins les étapes suivantes :
- injection d'une première partie de pièce dans une empreinte de moulage d'une première partie du premier chargeur au niveau d'un premier poste,
- injection d'une deuxième partie de pièce dans une empreinte de moulage d'une première partie du deuxième chargeur au niveau d'un deuxième poste,
- rotation du premier chargeur de sorte que la première partie du premier chargeur portant la première partie de pièce injectée, soit positionnée au niveau de la première zone de transfert et/ou d'assemblage,
- rotation du deuxième chargeur de sorte que la première partie du deuxième chargeur, portant la deuxième partie de pièce injectée, soit positionnée au niveau de la deuxième zone de transfert et/ou d'assemblage,
- transfert de la première partie de pièce dans une empreinte de transfert au niveau de la première zone de transfert et/ou d'assemblage ou transfert de la deuxième partie de pièce dans une empreinte de transfert au niveau de la deuxième zone de transfert et/ou d'assemblage,
- rotation du chargeur de transfert de sorte que l'empreinte de transfert dans laquelle est positionnée la première partie de pièce soit en regard, au niveau de la deuxième zone de transfert et/ou d'assemblage, de l'empreinte de moulage de la première partie du deuxième chargeur dans laquelle est positionnée la deuxième partie de pièce ou de sorte que l'empreinte de transfert dans laquelle est positionnée la deuxième partie de pièce soit en regard, au niveau de la première zone de transfert et/ou d'assemblage, de l'empreinte de moulage de la première partie du premier chargeur dans laquelle est positionnée la première partie de pièce,
- assemblage de la première partie de pièce avec la deuxième partie de pièce,
- éjection de la pièce finie issue de l'assemblage de la première partie de pièce avec la deuxième partie de pièce.

Selon une caractéristique de l'invention, les étapes d'injection de la première partie de pièce et de la deuxième partie de pièce sont réalisées simultanément et/ou les étapes de rotation des premier et deuxième chargeurs sont réalisées simultanément.

Selon une caractéristique de l'invention, le procédé d'injection comprend une étape supplémentaire d'injection d'une troisième partie de pièce et une étape supplémentaire d'assemblage de la troisième partie de pièce avec la première partie de pièce ou avec la deuxième parti de pièce.

L'invention sera mieux comprise, grâce à la description ci-après, qui se rapporte à des modes de réalisation selon la présente invention, donnés à titre d'exemples non limitatifs et expliqués avec référence aux dessins schématiques annexés, dans lesquels:
- la figure 1 est une vue en coupe partielle du moule d'injection selon l'invention dans laquelle les chargeurs sont agencés dans une première configuration,
- la figure 2 est une vue en coupe partielle du moule d'injection selon l'invention dans laquelle les chargeurs sont agencés dans une deuxième configuration,
- la figure 3 est une vue en coupe partielle du moule d'injection selon l'invention dans laquelle les chargeurs sont agencés dans une troisième configuration,
- la figure 4 est une vue de dessus des chargeurs du moule d'injection selon l'invention selon un premier mode de réalisation,
- la figure 5 est une vue de dessus des chargeurs du moule d'injection selon l'invention selon une première variante du premier mode de réalisation,
- la figure 6 est une vue de dessus des chargeurs du moule d'injection selon l'invention une troisième variante du premier mode de réalisation,
- la figure 7 est une vue de dessus des chargeurs du moule d'injection selon l'invention selon une cinquième variante du premier mode de réalisation,
- la figure 8 est une vue de dessus des chargeurs du moule d'injection selon l'invention selon une septième variante du premier mode de réalisation,
- la figure 9 est une vue de dessus des chargeurs du moule d'injection selon l'invention selon une neuvième variante du premier mode de réalisation,
- la figure 10 est une vue de dessus des chargeurs du moule d'injection selon l'invention selon un deuxième mode de réalisation,
- la figure 11 est une vue de dessus des chargeurs du moule d'injection selon l'invention selon un troisième mode de réalisation,
- la figure 12 est une vue de dessus des chargeurs du moule d'injection selon l'invention selon une neuvième variante du troisième mode de réalisation,
- la figure 13 est une vue en coupe partielle selon l'axe A-A du moule d'injection selon l'invention selon la neuvième variante du troisième mode de réalisation représentée en figure 12.

Pour la description qui va suivre du moule d'injection 1 selon l'invention, ledit moule d'injection 1 peut être utilisé en position horizontale ou en position verticale.

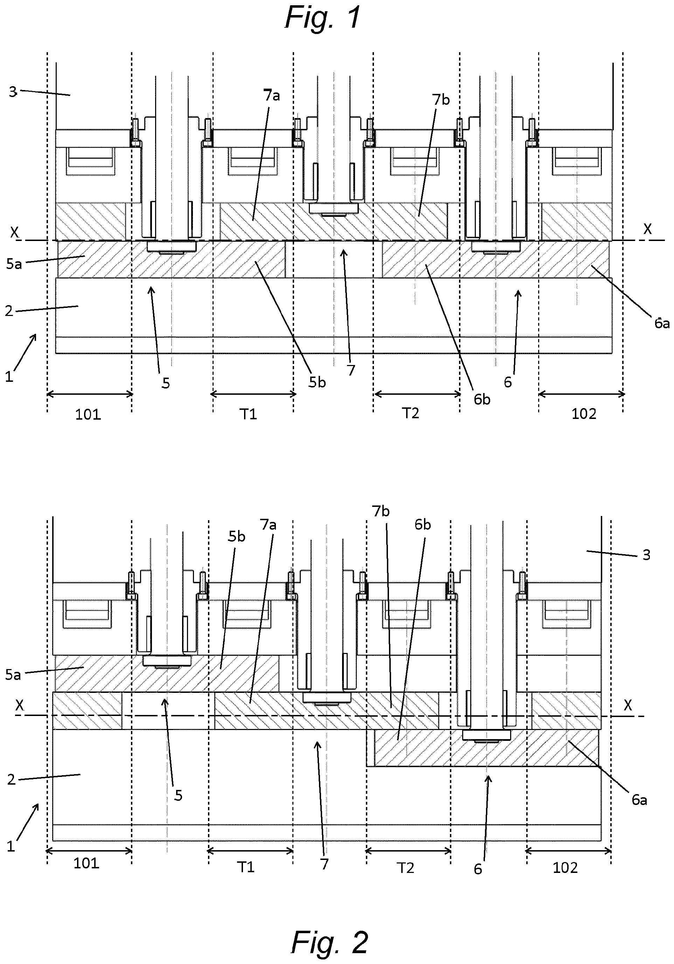

Quel que soit le mode de réalisation du moule d'injection 1 et quelle que soit la configuration des chargeurs 5, 6, 7 du moule d'injection 1 selon l'invention, le moule d'injection 1 comprend une première partie de moule 2, et une deuxième partie de moule 3. En référence aux figures 1 à 3 et 13, la première partie de moule 2 du moule d'injection 1 est positionnée en regard de la deuxième partie de moule 3. Selon l'invention, la première partie de moule 2 peut être fixe ou mobile axialement par rapport à la deuxième partie de moule 3. Alternativement ou en complément, la deuxième partie de moule 3 peut être fixe ou mobile axialement par rapport à la première partie de moule 2. Le déplacement axial de la première partie de moule 2 et/ou de la deuxième partie de moule 3 est réalisé au moins entre une position d'ouverture et une position de fermeture du moule d'injection 1.

Le moule d'injection 1 comprend au moins deux postes au niveau desquels une injection d'une partie de pièce est réalisée.

Le moule d'injection 1 comprend un premier chargeur 5 rotatif comportant une première partie 5a présentant au moins une première empreinte de moulage 9 positionnée au niveau d'un premier poste d'injection 101. Le premier chargeur 5 est configuré pour se déplacer au moins en rotation entre le premier poste d'injection et une première zone de transfert et/ou d'assemblage T1. Ainsi, à chaque rotation, la première partie 5a du premier chargeur 5 change de position. Le premier chargeur 5 est préférentiellement mobile en translation. Le premier chargeur 5 est positionné entre la première partie de moule 2 et la deuxième partie de moule 3 comme visible aux figures 1 à 3 et 13.

De plus, le moule d'injection 1 comprend également un deuxième chargeur 6 rotatif comportant une première partie 6a présentant au moins une première empreinte de moulage 10 positionnée au niveau d'un deuxième poste d'injection. Le deuxième chargeur 6 est configuré pour se déplacer au moins en rotation entre le deuxième poste d'injection et une deuxième zone de transfert et/ou d'assemblage T2. Ainsi, à chaque rotation, la première partie 6a du deuxième chargeur 6 change de position. Le deuxième chargeur 6 est préférentiellement mobile en translation. Le deuxième chargeur 6 est positionné entre la première partie de moule 2 et la deuxième partie de moule 3 comme visible aux figures 1 à 3 et 13.

En outre, le moule d'injection 1 comprend au moins un chargeur de transfert 7 mobile au moins en rotation configuré pour transférer une partie de pièce injectée dans l'empreinte de moulage 9 du premier chargeur 5 ou dans l'empreinte de moulage 10 du deuxième chargeur 6 sur respectivement le deuxième chargeur 6 ou le premier chargeur 5.

Le chargeur de transfert 7 comprend au moins une empreinte de transfert 11 adaptée pour s'appairer aux empreintes de moulage du premier chargeur et du deuxième chargeur 6 afin de transférer les parties de pièces d'un chargeur à l'autre.

Le chargeur de transfert 7 est configuré pour se déplacer au moins en rotation entre la première zone de transfert et/ou d'assemblage T1 et la deuxième zone de transfert et/ou d'assemblage T2, et préférentiellement en rotation et en translation. Le chargeur de transfert 7 est positionné entre la première partie de moule 2 et la deuxième partie de moule 3 comme visible aux figures 1 à 3 et 13.

Dans une première configuration des chargeurs 5, 6, 7 du moule d'injection 1 selon l'invention représentée en figure 1, le premier chargeur 5, le deuxième chargeur 6 et le chargeur de transfert 7 sont montés mobiles sur la deuxième partie de moule 3. Bien entendu, dans cette première configuration, il est également possible que l'un des chargeurs 5, 6, 7 ou plusieurs des chargeurs 5, 6, 7 puissent être montés mobiles sur la première partie de moule 2 sans sortir du cadre de l'invention.

Dans la première configuration illustrée en figure 1, le chargeur de transfert 7 présente une première partie de chargeur 7a dans la première zone de transfert et/ou d'assemblage T1 et une deuxième partie de chargeur 7b dans la deuxième zone de transfert et/ou d'assemblage T2. La première partie 7a du chargeur de transfert 7 est positionnée en regard d'une deuxième partie 5b du premier chargeur 5 dans la première zone de transfert et/ou d'assemblage T1 et la deuxième partie de chargeur 7b est positionnée en regard d'une deuxième partie 6b du deuxième chargeur 6 dans la deuxième zone de transfert et/ou d'assemblage T2. Bien entendu, lorsque le chargeur de transfert 7 effectue une rotation la première partie de chargeur 7a se trouve dans la deuxième zone de transfert et/ou d'assemblage T2 et la deuxième partie de chargeur 7b se trouve dans la première zone de transfert et/ou d'assemblage T1. Ainsi, à chaque rotation les première et deuxième parties de chargeur 7a, 7b changent de position.

Dans une position horizontale du moule d'injection 1, le chargeur de transfert 7 est agencé au dessus des premier et deuxième chargeurs 5, 6.

Dans une position verticale du moule d'injection 1, le chargeur de transfert 7 est agencé le plus proche de la deuxième partie de moule 3 par rapport aux premier et deuxième chargeurs 5, 6 et en retrait par rapport à l'axe longitudinal X-X du moule d'injection 1 en direction de la deuxième partie de moule 3.

Dans une deuxième configuration des chargeurs 5, 6, 7 du moule d'injection 1 selon l'invention représentée en figure 2, le premier chargeur 5, le deuxième chargeur 6 et le chargeur de transfert 7 sont montés mobiles sur la deuxième partie de moule 3. Bien entendu, dans cette deuxième configuration, il est également possible que l'un des chargeurs 5, 6, 7 ou plusieurs des chargeurs 5, 6, 7 puissent être montés mobiles sur la première partie de moule 2 sans sortir du cadre de l'invention.

Dans la deuxième configuration illustrée en figure 2, le chargeur de transfert 7 présente une première partie de chargeur 7a dans la première zone de transfert et/ou d'assemblage T1 et une deuxième partie de chargeur 7b dans la deuxième zone de transfert et/ou d'assemblage T2. La première partie 7a du chargeur de transfert 7 est positionnée en regard d'une deuxième partie 5b du premier chargeur 5 dans la première zone de transfert et/ou d'assemblage T1 et la deuxième partie de chargeur 7b est positionnée en regard d'une deuxième partie 6b du deuxième chargeur 6 dans la deuxième zone de transfert et/ou d'assemblage T2. Bien entendu, lorsque le chargeur de transfert 7 effectue une rotation la première partie de chargeur 7a se trouve dans la deuxième zone de transfert et/ou d'assemblage T2 et la deuxième partie de chargeur 7b se trouve dans la première zone de transfert et/ou d'assemblage T1. Ainsi, à chaque rotation les première et deuxième parties de chargeur 7a, 7b changent de position.

Dans une position horizontale du moule d'injection 1, le chargeur de transfert 7 est agencé entre le premier chargeur 5 et le deuxième chargeur 6 par rapport à l'axe longitudinal X-X du moule d'injection 1. Plus particulièrement, la deuxième partie 5b du premier chargeur 5 est positionnée au dessus de la première partie de chargeur 7a et la deuxième partie 6b du deuxième chargeur 6 est positionnée sous la deuxième partie de chargeur 7b.

Dans une position verticale du moule d'injection 1, le premier chargeur 5 est agencé le plus près de la deuxième partie de moule 3 par rapport au chargeur de transfert 7 et au deuxième chargeur 6 et le deuxième chargeur 6 est agencé le plus proche de la première partie de moule 2 par rapport au premier chargeur 5 et au chargeur de transfert 7, ledit chargeur de transfert étant positionné entre le premier chargeur 5 et le deuxième chargeur 6. Plus particulièrement, le premier chargeur 5 est positionné en retrait par rapport à l'axe longitudinal X-X du moule d'injection 1 en direction de la deuxième partie de moule 3 et le deuxième chargeur 6 est positionné en retrait par rapport à l'axe longitudinal X-X du moule d'injection 1 en direction de la première partie de moule 2.

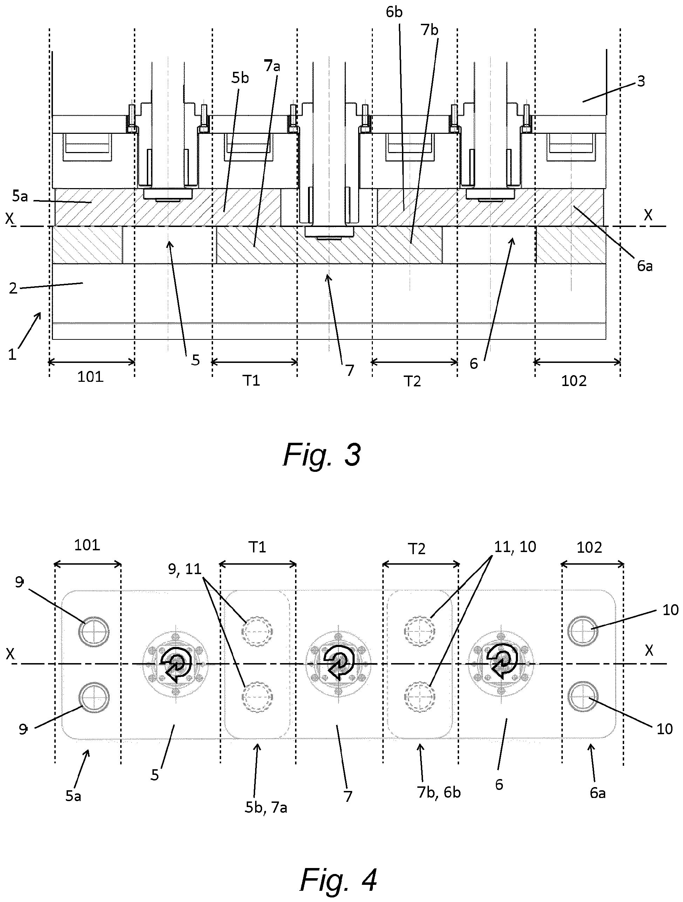

Dans une troisième configuration des chargeurs 5, 6, 7 du moule d'injection 1 selon l'invention représentée en figure 3, le premier chargeur 5, le deuxième chargeur 6 et le chargeur de transfert 7 sont montés mobiles sur la deuxième partie de moule 3. Bien entendu, dans cette troisième configuration, il est également possible que l'un des chargeurs 5, 6, 7 ou plusieurs des chargeurs 5, 6, 7 puissent être montés mobiles sur la première partie de moule 2 sans sortir du cadre de l'invention.

Dans la troisième configuration illustrée en figure 3, le chargeur de transfert 7 présente une première partie de chargeur 7a dans la première zone de transfert et/ou d'assemblage T1 et une deuxième partie de chargeur 7b dans la deuxième zone de transfert et/ou d'assemblage T2. La première partie 7a du chargeur de transfert 7 est positionnée en regard d'une deuxième partie 5b du premier chargeur 5 dans la première zone de transfert et/ou d'assemblage T1 et la deuxième partie de chargeur 7b est positionnée en regard d'une deuxième partie 6b du deuxième chargeur 6 dans la deuxième zone de transfert et/ou d'assemblage T2. Bien entendu, lorsque le chargeur de transfert 7 effectue une rotation la première partie de chargeur 7a se trouve dans la deuxième zone de transfert et/ou d'assemblage T2 et la deuxième partie de chargeur 7b se trouve dans la première zone de transfert et/ou d'assemblage T1. Ainsi, à chaque rotation les première et deuxième parties de chargeur 7a, 7b changent de position.

Dans une position horizontale du moule d'injection 1, le chargeur de transfert 7 est agencé en dessous des premier et deuxième chargeurs 5, 6.

Dans une position verticale du moule d'injection 1, le chargeur de transfert 7 est agencé le plus proche de la première partie de moule 2 par rapport aux premier et deuxième chargeurs 5, 6 et en retrait par rapport à l'axe longitudinal X-X du moule d'injection 1 en direction de la première partie de moule 2.

Chaque configuration développée ci-avant est applicable à n'importe quel mode de réalisation, variante et alternative décrits ci-après.

Tous les procédés d'injection décrits ci-après, et ce, quel que soit le mode de réalisation, la variante de mode de réalisation ou l'alternative, ne porte que sur un cycle de production d'une pièce pour plus de clarté. Bien entendu, pendant le cycle de production de la pièce décrit, d'autres cycles de production d'autres pièces sont réalisés simultanément et dans le même moule d'injection 1 selon l'invention.

Le premier mode de réalisation du moule d'injection 1 va maintenant être décrit en référence à la figure 4.

Dans le premier mode de réalisation, le moule d'injection comprend un premier poste 101, une première zone de transfert et/ou d'assemblage T1, un deuxième poste 102 et une deuxième zone de transfert et/ou d'assemblage T2. Dans le premier mode de réalisation, le premier poste 101 et le deuxième poste 102 sont des postes d'injection de partie de pièce.

En outre, le premier chargeur 5 comporte une première partie 5a et une deuxième partie 5b opposée à la première partie 5a. Chaque partie 5a, 5b du premier chargeur 5 présente au moins une empreinte de moulage 9.

Le premier chargeur 5 est configuré pour se déplacer au moins en rotation entre le premier poste 101 et la première zone de transfert et/ou d'assemblage T1. Ainsi, à chaque rotation, les première et deuxième parties 5a, 5b du premier chargeur 5 changent de position et passent du premier poste 101 à la première zone de transfert et/ou d'assemblage T1.

En outre, le deuxième chargeur 6 comporte une première partie 6a et une deuxième partie 6b opposée à la première partie 6a. Chaque partie 6a, 6b du deuxième chargeur 6 présente au moins une empreinte de moulage 10.

Le deuxième chargeur 6 est configuré pour se déplacer au moins en rotation entre le deuxième poste 102 et la deuxième zone de transfert et/ou d'assemblage T2. Ainsi, à chaque rotation, les première et deuxième parties 6a, 6b du deuxième chargeur 6 changent de position et passent du deuxième poste 102 à la deuxième zone de transfert et/ou d'assemblage T2.

Par ailleurs, le chargeur de transfert 7 comprend une première partie de chargeur 7a et une deuxième partie de chargeur 7b opposée à la première partie de chargeur 7a. Chaque partie 7a, 7b du chargeur de transfert 7 présente au moins une empreinte de transfert 11.

Le chargeur de transfert 7 est configuré pour se déplacer au moins en rotation entre la première zone de transfert et/ou d'assemblage T1 et la deuxième zone de transfert et/ou d'assemblage T2.

Dans le premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon le premier mode de réalisation, on procède comme décrit ci-après.

On injecte au niveau du premier poste 101 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du deuxième poste d'injection 102.

Puis, le premier chargeur 5 et le deuxième chargeur 6 effectuent une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La première partie de pièce et la deuxième partie de pièce sont ensuite assemblées puis éjectées au niveau de la deuxième zone de transfert et/ou d'assemblage T2 par exemple par un bras latéral d'éjection.

Alternativement, lorsque la première partie de pièce est au niveau de la première zone de transfert et/ou d'assemblage T1 et que la deuxième partie de pièce est au niveau de la deuxième zone de transfert et/ou d'assemblage T2, le chargeur de transfert 7 récupère la deuxième partie de pièce dans une empreinte de transfert 11 et effectue une rotation de manière à ce que l'empreinte de transfert 11 dans laquelle est positionnée la deuxième partie de pièce soit en regard, au niveau de la première zone de transfert et/ou d'assemblage T1, de l'empreinte de moulage 9 du premier chargeur 5 dans laquelle est positionnée la première partie de pièce.

La première partie de pièce et la deuxième partie de pièce sont ensuite assemblées puis éjectées au niveau de la première zone de transfert et/ou d'assemblage T1 par exemple par un bras latéral d'éjection.

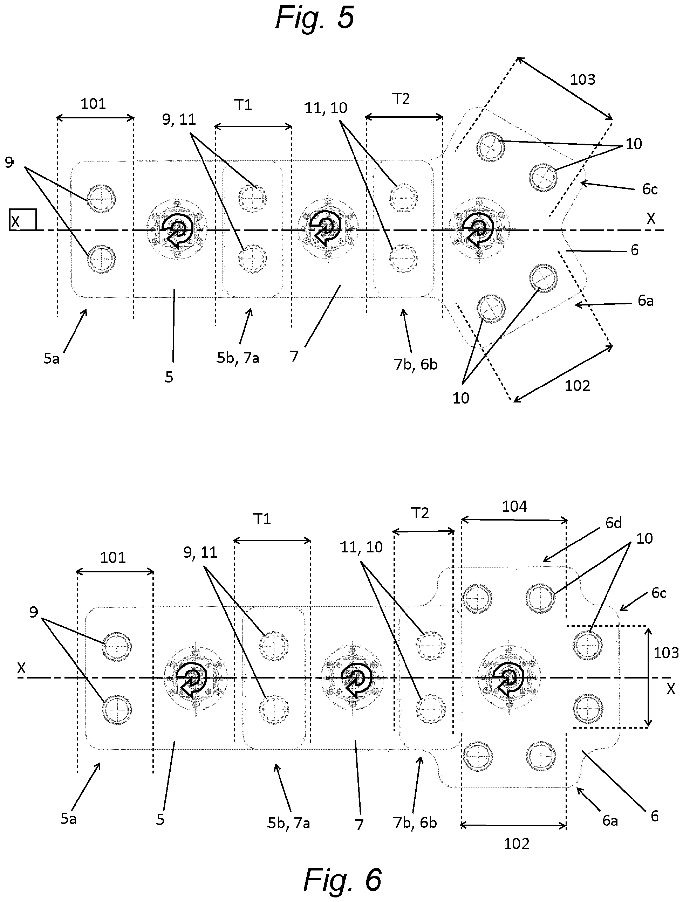

Une première variante du premier mode de réalisation du moule d'injection 1 va maintenant être décrite en référence à la figure 5.

La première variante du premier mode de réalisation diffère du premier mode de réalisation en ce que :
- le deuxième chargeur 6 comprend une troisième partie 6c
- le moule d'injection 1 comprend un troisième poste 103.

Le reste des caractéristiques du moule d'injection 1, des premier et deuxième chargeurs 5, 6 et du chargeur de transfert 7 restent les mêmes.

Dans la première variante du premier mode de réalisation, le premier poste 101 est un poste d'injection d'une première partie de pièce, le deuxième poste 102 est un poste d'injection d'une deuxième partie de pièce et le troisième poste 103 est un poste d'éjection.

Dans la première variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la première variante du premier mode de réalisation, on procède comme décrit ci-après.

On injecte au niveau du premier poste 101 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du deuxième poste d'injection 102.

Puis, le premier chargeur 5 et le deuxième chargeur 6 effectue une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La première partie de pièce et la deuxième partie de pièce sont ensuite assemblées au niveau de la deuxième zone de transfert et/ou d'assemblage T2 dans l'empreinte de moulage 10 de la première partie 6a du deuxième chargeur 6.

Enfin, le deuxième chargeur 6 effectue une rotation de manière à ce que la première partie 6a du deuxième chargeur 6 portant la pièce finie, issue de l'assemblage des première et deuxième parties de pièce, soit positionnée au niveau du troisième poste afin que la pièce finie soit éjectée.

Dans une deuxième variante du premier mode de réalisation du moule d'injection 1 non représentée va maintenant être décrite.

La deuxième variante du premier mode de réalisation diffère du premier mode de réalisation en ce que :
- le premier chargeur 5 comprend une troisième partie 5c
- le moule d'injection 1 comprend un troisième poste 103.

Le reste des caractéristiques du moule d'injection 1, des premier et deuxième chargeurs 5, 6 et du chargeur de transfert 7 restent les mêmes.

Dans la deuxième variante du premier mode de réalisation, le premier poste 101 est un poste d'injection d'une deuxième partie de pièce, le deuxième poste 102 est un poste d'injection d'une deuxième partie de pièce et le troisième poste 103 est un poste d'éjection.

Dans la deuxième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la deuxième variante du premier mode de réalisation, on procède comme décrit ci-après.

On injecte au niveau du deuxième poste 102 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du premier poste 101.

Puis, le premier chargeur 5 et le deuxième chargeur 6 effectuent une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2.

Le chargeur de transfert 7 récupère alors la deuxième partie de pièce dans une empreinte de transfert 11 au niveau de la deuxième zone de transfert et/ou d'assemblage T2.

Le chargeur de transfert 7 effectue ensuite, une rotation de manière à ce que l'empreinte de transfert 11 dans laquelle est positionnée la deuxième partie de pièce soit en regard, au niveau de la première zone de transfert et/ou d'assemblage T1, de l'empreinte de moulage 9 de la première partie 5a du premier chargeur 6 dans laquelle est positionnée la première partie de pièce.

La première partie de pièce et la deuxième partie de pièce sont ensuite assemblées au niveau de la première zone de transfert et/ou d'assemblage T1 dans l'empreinte de moulage 9 de la première partie 5a du premier chargeur 5.

Enfin, le premier chargeur 5 effectue une rotation de manière à ce que la première partie 5a du premier chargeur 5 portant la pièce finie, issue de l'assemblage des première et deuxième parties de pièce, soit positionnée au niveau du troisième poste 103 afin que la pièce finie soit éjectée.

Une troisième variante du premier mode de réalisation du moule d'injection 1 va maintenant être décrite en référence à la figure 6.

La troisième variante du premier mode de réalisation diffère du premier mode de réalisation en ce que :
- le deuxième chargeur 6 comprend une troisième partie 6c et une quatrième partie 6d,
- le moule d'injection 1 comprend un troisième poste 103 et un quatrième poste 104.

Le reste des caractéristiques du moule d'injection 1, des premier et deuxième chargeurs 5, 6 et du chargeur de transfert 7 restent les mêmes.

Dans la troisième variante du premier mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans la troisième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la troisième variante du premier mode de réalisation, on procède comme décrit ci-après.

On injecte au niveau du premier poste 101 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du deuxième poste d'injection 102.

Puis, le premier chargeur 5 et le deuxième chargeur 6 effectue une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La première partie de pièce et la deuxième partie de pièce sont ensuite assemblées au niveau de la deuxième zone de transfert et/ou d'assemblage T2 dans l'empreinte de moulage 10 de la première partie 6a du deuxième chargeur 6.

Puis, le deuxième chargeur 6 effectue une rotation de manière à ce que la première partie 6a portant la pièce assemblée, issue de l'assemblage des première et deuxième parties de pièce, soit positionnée au niveau du quatrième poste 104.

Ensuite, au niveau du quatrième poste 104, on réalise un des traitements suivant par exemple : le refroidissement ou le réchauffement ou la pose d'insert ou l'encliquetage ou la soudure miroir ou la soudure par joint surmoulé ou la pose d'un décor ou le marquage laser ou injection d'une autre matière sur la pièce assemblée.

Enfin, le deuxième chargeur 6 effectue une nouvelle rotation de manière à ce que la première partie 6a du deuxième chargeur 6 portant la pièce finie, correspondant à la pièce assemblée puis traitée, soit positionnée au niveau du troisième poste 103 afin que la pièce finie soit éjectée.

Dans une première alternative non représentée de la troisième variante du premier mode de réalisation, le premier poste 101 est un poste d'injection de la première partie de pièce, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'injection d'une deuxième partie de pièce et le quatrième poste 104 est un poste d'éjection.

Ainsi, dans cette première alternative, la traitement de refroidissement ou de réchauffement ou de pose d'insert ou d'encliquetage ou de soudure miroir ou de soudure par joint surmoulé ou de pose d'un décor ou de marquage laser ou d'injection d'une autre matière, qu'on appellera traitement complémentaire pour la suite de la description de la présente demande, est réalisée après l'injection de la deuxième partie de pièce et avant l'assemblage de la deuxième partie de pièce avec la première partie de pièce dans la deuxième zone de transfert et/ou d'assemblage T2. Dans cette première alternative, le traitement complémentaire peut être par exemple, une pose d'un insert, une injection d'une première matière, un refroidissement, un marquage laser, etc.

Dans une deuxième alternative non représentée de la troisième variante du premier mode de réalisation, le premier poste 101 est un poste d'injection de la première partie de pièce, le deuxième poste 102 est un poste d'injection, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière ; et le quatrième poste 104 est un poste d'éjection.

Ainsi, dans cette deuxième alternative, le traitement complémentaire réalisé au niveau du troisième poste 103 est réalisée avant l'injection au niveau du deuxième poste 102 et avant l'assemblage de la deuxième partie de pièce au niveau de la deuxième zone de transfert et/ou d'assemblage T2. Dans cette deuxième alternative, le traitement complémentaire peut être une pose d'insert, une injection d'une première matière par exemple.

Dans une quatrième variante du premier mode de réalisation du moule d'injection 1 non représentée va maintenant être décrite.

La quatrième variante du premier mode de réalisation diffère du premier mode de réalisation en ce que :
- le premier chargeur 5 comprend une troisième partie 5c et une quatrième partie 5d,
- le moule d'injection 1 comprend un troisième poste 103 et un quatrième poste 104.

Le reste des caractéristiques du moule d'injection 1, des premier et deuxième chargeurs 5, 6 et du chargeur de transfert 7 restent les mêmes.

Dans la quatrième variante du premier mode de réalisation, le premier poste 101 est un poste injection d'une deuxième partie de pièce, le deuxième poste 102 est un poste d'éjection, le troisième poste 103 est un poste d'injection d'une première partie de pièce et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans la quatrième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la quatrième variante du premier mode de réalisation, on procède comme décrit ci-après.

On injecte au niveau du troisième poste 103 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du premier poste d'injection 101.

Puis le premier chargeur 5 effectue une rotation de sorte que la première partie 5a du premier chargeur 5 portant la première partie de pièce injectée, soit positionnée au niveau du quatrième poste 104. On réalise alors un traitement complémentaire sur la première partie de pièce injectée au niveau du quatrième poste 104.

Le deuxième chargeur 6 effectue une rotation de sorte que la première partie 6a du deuxième chargeur 6, portant la deuxième partie de pièce injectée, soit positionnée au niveau de la deuxième zone de transfert et/ou d'assemblage T2.

Le premier chargeur 5 effectue une rotation de sorte que la première partie 5a du premier chargeur 5, portant la première partie de pièce injectée et traitée, soit positionnée au niveau de la première zone de transfert et/ou d'assemblage T1.

Le chargeur de transfert 7 récupère alors la deuxième partie de pièce dans une empreinte de transfert 11 au niveau de la deuxième zone de transfert et/ou d'assemblage T2.

Le chargeur de transfert 7 effectue ensuite, une rotation de manière à ce que l'empreinte de transfert 11 dans laquelle est positionnée la deuxième partie de pièce soit en regard, au niveau de la première zone de transfert et/ou d'assemblage T1, de l'empreinte de moulage 9 de la première partie 5a du premier chargeur 5 dans laquelle est positionnée la première partie de pièce.

La première partie de pièce et la deuxième partie de pièce sont ensuite assemblées au niveau de la première zone de transfert et/ou d'assemblage T1 dans l'empreinte de moulage 9 de la première partie 5a du premier chargeur 5.

Enfin, le premier chargeur 5 effectue une rotation de manière à ce que la première partie 5a du premier chargeur 5 portant la pièce finie, issue de l'assemblage des première et deuxième parties de pièce, soit positionnée au niveau du deuxième poste 102 afin que la pièce finie soit éjectée.

Les premières et deuxièmes alternatives décrites pour la troisième variante du premier mode de réalisation sont applicables à la quatrième variante décrite ci-avant.

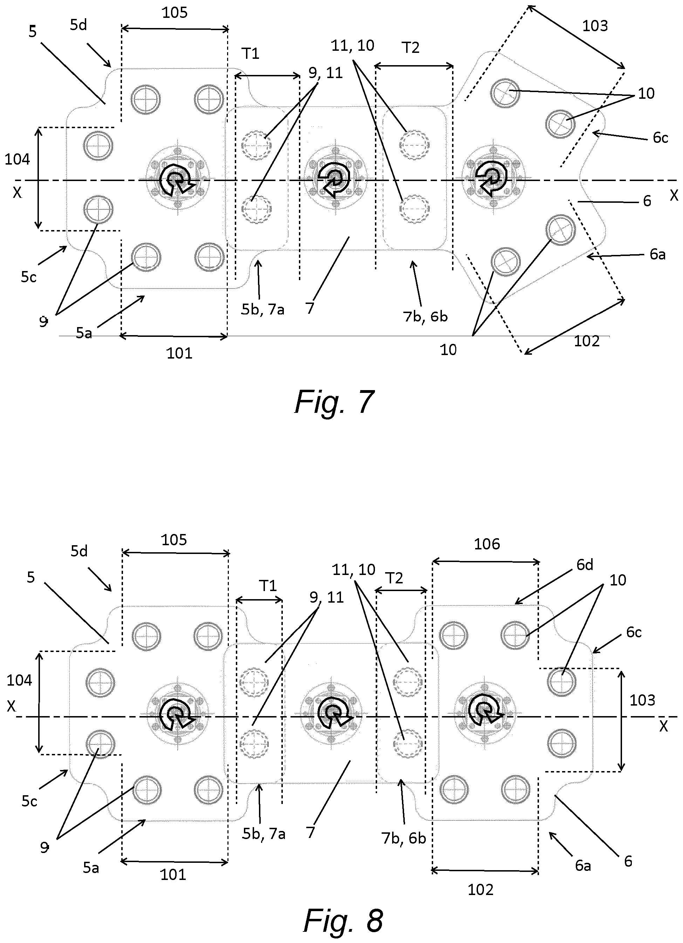

Une cinquième variante du premier mode de réalisation du moule d'injection 1 va maintenant être décrite en référence à la figure 7.

La cinquième variante du premier mode de réalisation diffère du premier mode de réalisation en ce que :
- le premier chargeur 5 comprend une troisième partie 5c et une quatrième partie 5d,
- le deuxième chargeur 6 comprend une troisième partie 6c,
- le moule d'injection 1 comprend un troisième poste 103, un quatrième poste 104 et un cinquième poste 105.

Le reste des caractéristiques du moule d'injection 1, des premier et deuxième chargeurs 5, 6 et du chargeur de transfert 7 restent les mêmes.

Dans la première variante du premier mode de réalisation, le premier poste 101 est un poste d'injection d'une première partie de pièce, le deuxième poste 102 est un poste d'injection d'une deuxième partie de pièce, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière et le cinquième poste 105 un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans la cinquième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la cinquième variante du premier mode de réalisation, on procède comme décrit ci-après.

On injecte au niveau du premier poste 101 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du deuxième poste d'injection 102.

Puis, le premier chargeur 5 effectue une rotation de sorte que la première partie 5a du premier chargeur 5 portant la première partie de pièce injectée, soit positionnée au niveau du quatrième poste 104.

On réalise le traitement complémentaire sur la première partie de pièce injectée au niveau du quatrième poste 104, par exemple un marquage laser, un surmoulage avec une autre matière, etc.

Puis, le premier chargeur 5 effectue une rotation de sorte que la première partie 5a du premier chargeur 5 portant la première partie de pièce injectée, soit positionnée au niveau du cinquième poste 105.

On réalise le deuxième traitement complémentaire sur la première partie de pièce injectée et traitée au niveau du cinquième poste 105, par exemple un marquage laser, un surmoulage avec une autre matière, etc.

Il est à noter que selon l'invention, le premier traitement complémentaire réalisé au quatrième poste 104 peut être identique ou différente du deuxième traitement complémentaire réalisé au cinquième poste 105.

Puis, le premier chargeur 5 effectue une rotation de sorte que la première partie 5a du premier chargeur 5 portant la première partie de pièce injectée et traitée, soit positionnée au niveau de la première zone de transfert et/ou d'assemblage T1.

Le deuxième chargeur 6 effectue une rotation de sorte que la première partie 6a du deuxième chargeur 6, portant la deuxième partie de pièce injectée, soit positionnée au niveau de la deuxième zone de transfert et/ou d'assemblage T2, la rotation du deuxième chargeur 6 pouvant être opérée pendant ou en différé de l'une des étapes décrites précédemment.

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La première partie de pièce et la deuxième partie de pièce sont ensuite assemblées au niveau de la deuxième zone de transfert et/ou d'assemblage T2

Enfin, le deuxième chargeur 6 effectue une rotation de manière à ce que la première partie 6a du deuxième chargeur 6 portant la pièce finie, issue de l'assemblage des première et deuxième parties de pièce, soit positionnée au niveau du troisième poste 103 afin que la pièce finie soit éjectée.

Selon une première alternative de la cinquième variante, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière ; le quatrième poste 104 est un poste d'injection d'une première partie de pièce, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste d'injection d'une deuxième partie de pièce et le troisième poste 103 est un poste d'éjection.

Ainsi, dans cette première alternative, un premier traitement complémentaire est réalisé avant l'injection de la première partie de pièce et un deuxième traitement complémentaire est réalisé après l'injection de la première partie de pièce et avant le transfert de ladite première partie de pièce sur le chargeur de transfert 7. Dans cette première alternative, le premier traitement complémentaire peut être par exemple, une pose d'un insert, et le deuxième traitement complémentaire peut être une injection d'une deuxième matière.

Selon une deuxième alternative de la cinquième variante, le premier poste 101 est un poste d'éjection, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'injection d'une deuxième partie de pièce, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière et le cinquième poste 105 est un poste d'injection d'une première partie de pièce.

Ainsi, selon cette deuxième alternative, on réalise un premier traitement complémentaire avant l'injection de la deuxième partie de pièce et on réalise un deuxième traitement complémentaire avant l'injection de la première partie de pièce. Le premier et le deuxième traitement complémentaire peuvent être différents ou identiques.

En outre, selon cette deuxième alternative, la deuxième partie de pièce qui est transférée sur le chargeur de transfert 7 et assemblée avec la première partie de pièce au niveau de la première zone de transfert et/ou d'assemblage T1 dans l'empreinte de moulage 9 de la première partie 5a du premier chargeur 5. Enfin, le premier chargeur 5 effectue une rotation de manière à ce que la première partie 5a du premier chargeur 5 portant la pièce finie, issue de l'assemblage des première et deuxième parties de pièce, soit positionnée au niveau du troisième poste 103 afin que la pièce finie soit éjectée.

Selon une troisième alternative de la cinquième variante, le premier poste 101 est un poste d'éjection, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'injection d'une deuxième partie de pièce, le quatrième poste 104 est un poste d'injection d'une première partie de pièce et le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette troisième alternative, on réalise un premier traitement complémentaire avant l'injection de la deuxième partie de pièce et on réalise un deuxième traitement complémentaire après l'injection de la première partie de pièce et avant l'assemblage de la première partie de pièce avec la deuxième partie de pièce. Le premier et le deuxième traitement complémentaire peuvent être différents ou identiques. Le reste du procédé reste similaire à celui de la deuxième alternative.

Selon une quatrième alternative de la cinquième variante, le premier poste 101 est un poste d'éjection, le deuxième poste 102 est un poste d'injection d'une deuxième partie de pièce, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le quatrième poste 104 est un poste d'injection d'une première partie de pièce et le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette quatrième alternative, on réalise un premier traitement complémentaire après l'injection de la deuxième partie de pièce et avant le transfert de la deuxième partie de pièce ; et on réalise un deuxième traitement complémentaire après l'injection de la première partie de pièce et avant l'assemblage de la première partie de pièce avec la deuxième partie de pièce. Le premier et le deuxième traitement complémentaire peuvent être différents ou identiques. Le reste du procédé reste similaire à celui des deuxième et troisième alternatives.

Selon une cinquième alternative de la cinquième variante, le premier poste 101 est un poste d'éjection, le deuxième poste 102 est un poste d'injection d'une deuxième partie de pièce, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière et le cinquième poste 105 est un poste d'injection d'une première partie de pièce.

Ainsi dans cette quatrième alternative, on réalise un premier traitement complémentaire après l'injection de la deuxième partie de pièce et avant le transfert de la deuxième partie de pièce ; et on réalise un deuxième traitement complémentaire avant l'injection de la première partie de pièce. Le premier et le deuxième traitement complémentaire peuvent être différents ou identiques. Le reste du procédé reste similaire à celui des deuxième et troisième alternatives.

Une sixième variante non représentée du premier mode de réalisation du moule d'injection 1 va maintenant être décrite.

La sixième variante du premier mode de réalisation diffère du premier mode de réalisation en ce que :
- le premier chargeur 5 comprend une troisième partie 5c,
- le deuxième chargeur 6 comprend une troisième partie 6c et une quatrième partie 6d,
- le moule d'injection comprend un troisième poste 103, un quatrième poste 104, et un cinquième poste 105.

Le reste des caractéristiques du moule d'injection 1, des premier et deuxième chargeurs 5, 6 et du chargeur de transfert 7 restent les mêmes.

Dans la sixième variante du premier mode de réalisation, le deuxième poste 102 est un poste d'injection d'une première partie de pièce, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière et le cinquième poste 105 est un poste d'injection d'une deuxième partie de pièce.

Dans la sixième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la sixième variante du premier mode de réalisation, on procède comme décrit ci-après.

On injecte au niveau du deuxième poste 102 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du cinquième poste 105.

Puis le deuxième chargeur 6 effectue une rotation de manière à ce que la première partie 6a du deuxième chargeur 6 portant la deuxième partie de pièce injectée, soit positionnée au niveau du quatrième poste 104. On réalise alors un premier traitement complémentaire au niveau du quatrième poste 104 sur la deuxième partie de pièce injectée par exemple un marquage laser, un surmoulage avec une autre matière, etc.

Puis, le deuxième chargeur 6 effectue une nouvelle rotation de manière à ce que la première partie 6a du deuxième chargeur 6 portant la deuxième partie de pièce injectée et traitée soit positionnée au niveau du premier poste 101. On réalise alors un deuxième traitement complémentaire sur la deuxième partie de pièce injectée et traitée par exemple un marquage laser, une pose d'insert, etc.

Il est à noter que selon l'invention, le premier traitement complémentaire réalisé au quatrième poste 104 peut être identique ou différente du deuxième traitement complémentaire réalisé au cinquième poste 105.

Puis, le premier chargeur 5 et le deuxième chargeur 6 effectuent une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2.

La rotation du premier chargeur 5 et la rotation du deuxième chargeur 6 pour atteindre respectivement la première zone de transfert et/ou d'assemblage T1 et la deuxième zone de transfert et/ou d'assemblage T2, peuvent être réalisées en décalé par exemple la rotation du premier chargeur 5 s'effectue pendant l'un des traitements complémentaires de la deuxième partie de pièce; ou réalisées simultanément.

Le chargeur de transfert 7 récupère alors la deuxième partie de pièce dans une empreinte de transfert 11 au niveau de la deuxième zone de transfert et/ou d'assemblage T2.

Le chargeur de transfert 7 effectue ensuite, une rotation de manière à ce que l'empreinte de transfert 11 dans laquelle est positionnée la deuxième partie de pièce soit en regard, au niveau de la première zone de transfert et/ou d'assemblage T1, de l'empreinte de moulage 9 de la première partie 5a du premier chargeur 5 dans laquelle est positionnée la première partie de pièce.

La première partie de pièce et la deuxième partie de pièce sont ensuite assemblées au niveau de la première zone de transfert et/ou d'assemblage T1 dans l'empreinte de moulage 9 de la première partie 5a du premier chargeur 5.

Enfin, le premier chargeur 5 effectue une rotation de manière à ce que la première partie 5a du premier chargeur 5 portant la pièce finie, issue de l'assemblage des première et deuxième parties de pièce, soit positionnée au niveau du troisième poste 103 afin que la pièce finie soit éjectée.

Dans une première alternative de la sixième variante, le deuxième poste 102 est un poste d'injection d'une première partie de pièce, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'éjection, le quatrième poste 104 est un poste d'injection d'une deuxième partie de pièce et le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette première alternative, on réalise un premier traitement complémentaire avant l'injection de la deuxième partie de pièce et on réalise un deuxième traitement complémentaire après l'injection de la deuxième partie de pièce et avant le transfert de la deuxième partie de pièce au niveau de la deuxième zone de transfert et/ou d'assemblage T2. Le premier et le deuxième traitement complémentaire peuvent être différents ou identiques. Le reste du procédé reste similaire à celui de la sixième variante.

Dans une deuxième alternative de la sixième variante, le deuxième poste 102 est un poste d'injection d'une première partie de pièce, le premier poste 101 est un poste d'injection d'une deuxième partie de pièce, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière et le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette première alternative, on réalise un premier traitement complémentaire et un deuxième traitement complémentaire avant l'injection de la deuxième partie de pièce. Le premier et le deuxième traitement complémentaire peuvent être différents ou identiques. Le reste du procédé reste similaire à celui de la sixième variante.

Dans une troisième alternative de la sixième variante, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste est un poste d'injection d'une première partie de pièce, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le quatrième poste 104 est un poste d'injection d'une deuxième partie de pièce et le cinquième poste 105 est un poste d'éjection.

Pour former une pièce par un procédé d'injection mis en oeuvre par le moule d'injection 1 selon la troisième alternative de la sixième variante du premier mode de réalisation, on procède comme décrit ci-après.

On réalise un premier traitement complémentaire préalable à l'injection dans une empreinte de moulage 9 de la première partie 5a du premier chargeur 5 au niveau du troisième poste 103. Parallèlement, on injecte simultanément ou légèrement en différé une deuxième partie de pièce dans une empreinte de moulage 10 de la première partie 6a du deuxième chargeur 6 au niveau du quatrième poste d'injection 104.

Puis le premier chargeur 5 effectue une rotation de sorte que la première partie 5a du premier chargeur 5 soit positionnée au niveau du deuxième poste 102. Puis on injecte au niveau du deuxième poste 102 une première partie de pièce dans une empreinte de moulage 9 de la première partie 5a du premier chargeur 5,

Parallèlement, le deuxième chargeur 6 effectue une rotation de sorte que la première partie 6a du deuxième chargeur 6, portant la deuxième partie de pièce injectée, soit positionnée au niveau du premier poste 101. La rotation du premier chargeur 5 et la rotation du deuxième chargeur 6 peuvent réalisées en décalé ou simultanément. Ensuite, on réalise un traitement complémentaire sur la deuxième partie de pièce injectée au niveau du premier poste 101. L'injection de la première partie de pièce peut être réalisée en même temps que le traitement complémentaire réalisé sur la deuxième partie de pièce.

Puis, le premier chargeur 5 et le deuxième chargeur 6 effectuent une rotation simultanée ou en décalée de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La première partie de pièce et la deuxième partie de pièce sont ensuite assemblées au niveau de la deuxième zone de transfert et/ou d'assemblage T2 dans l'empreinte de moulage 10 de la première partie 6a du deuxième chargeur 6.

Enfin, le deuxième chargeur 6 effectue une rotation de manière à ce que la première partie 6a du deuxième chargeur 6 portant la pièce finie, issue de l'assemblage des première et deuxième parties de pièce, soit positionnée au niveau du cinquième poste 105 afin que la pièce finie soit éjectée.

Dans une quatrième alternative de la sixième variante, le premier poste 101 est un poste d'injection d'une deuxième partie de pièce, le deuxième poste 102 est un poste d'injection d'une première partie de pièce, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, et le cinquième poste 105 est un poste d'éjection.

Ainsi dans cette quatrième alternative, on réalise un premier traitement complémentaire avant l'injection de la première partie de pièce et un deuxième traitement complémentaire avant l'injection de la deuxième partie de pièce, l'éjection de la pièce finie étant réalisée directement après l'assemblage de la première partie de pièce avec la deuxième partie de pièce au niveau de la deuxième zone de transfert et/ou d'assemblage T2. Le reste du procédé reste similaire à celui de la troisième alternative.

Dans une cinquième alternative de la sixième variante, le premier poste 101 est un poste d'injection d'une deuxième partie de pièce, le deuxième poste 102 est un poste d'injection d'une première partie de pièce, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le quatrième poste 104 est un poste d'éjection, et le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette cinquième alternative, on réalise un premier traitement complémentaire avant l'injection de la première partie de pièce et un deuxième traitement complémentaire après l'assemblage de la première partie de pièce avec la deuxième partie de pièce au niveau de la deuxième zone de transfert et/ou d'assemblage T2 et avant l'éjection au niveau du quatrième poste 104. Le reste du procédé reste similaire à celui de la troisième alternative.

Dans d'autres alternatives similaires aux troisième, quatrième et cinquième alternatives, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière et le troisième poste est un poste d'injection d'une première matière.

Une septième variante du premier mode de réalisation du moule d'injection 1 va maintenant être décrite en référence à la figure 8.

La septième variante du premier mode de réalisation diffère du premier mode de réalisation en ce que:
- le premier chargeur 5 comprend une troisième partie 5c et une quatrième partie 5d,
- le deuxième chargeur 6 comprend une troisième partie 6c et une quatrième partie 6d,
- le moule d'injection 1 comprend un troisième poste 103, un quatrième poste 104, un cinquième poste 105 et un sixième poste 106.

Le reste des caractéristiques du moule d'injection 1, des premier et deuxième chargeurs 5, 6 et du chargeur de transfert 7 restent les mêmes.

Dans la septième variante du premier mode de réalisation, le premier poste 101 est un poste d'injection d'une première partie de pièce, le deuxième poste 102 est un poste d'injection d'une deuxième partie de pièce, le troisième poste 103 est un poste d'éjection, le quatrième poste 104 et le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans la septième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la septième variante du premier mode de réalisation, on procède comme décrit ci-après.

On injecte au niveau du premier poste 101 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du deuxième poste d'injection 102.

Puis, le premier chargeur 5 effectue une rotation de sorte que la première partie 5a du premier chargeur 5 portant la première partie de pièce injectée, soit positionnée au niveau du quatrième poste 104. On réalise alors un premier traitement complémentaire sur la première partie de pièce injectée au niveau du quatrième poste 104, par exemple un marquage laser, une injection d'une autre matière, etc.

Ensuite, le premier chargeur 5 effectue une deuxième rotation de sorte que la première partie 5a du premier chargeur 5 portant la première partie de pièce injectée et traitée soit positionnée au niveau du cinquième poste 105. On réalise un deuxième traitement complémentaire sur la première partie de pièce injectée et traitée, par exemple une pose d'insert, un marquage laser, une injection d'une autre matière, etc. Le premier traitement complémentaire et le deuxième traitement complémentaire peuvent être ou non de même nature.

Puis, le premier chargeur 5 effectue une nouvelle rotation pour que la première partie 5a du premier chargeur 5 portant la première partie de pièce injectée et traitée, soit positionnée dans la première zone de transfert et/ou d'assemblage T1. Le deuxième chargeur 6 effectuent une rotation de sorte que soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2, la rotation du deuxième chargeur 6 pouvant être opérée pendant ou en différé de l'une des étapes décrites précédemment.

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La deuxième partie de pièce et la première partie de pièce sont ensuite assemblées au niveau de la deuxième zone de transfert et/ou d'assemblage T2.

Puis le deuxième chargeur 6 récupère la pièce assemblée, issue de l'assemblage des première et deuxième parties de pièce, dans l'empreinte de moulage 10, et effectue une rotation de sorte que ladite empreinte de moulage 10 contenant la pièce assemblée soit au niveau du sixième poste 106. On réalise un troisième traitement complémentaire sur la pièce assemblée au niveau du sixième poste 106.

Enfin, le deuxième chargeur 6 effectue une rotation de manière à ce que la pièce finie positionnée dans l'empreinte de moulage 10 du deuxième chargeur 6 soit au niveau du poste d'éjection 103 pour être éjectée.

Dans une première alternative de la septième variante du premier mode de réalisation, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste d'injection d'une deuxième partie de pièce, le troisième poste 103 est un poste d'éjection, le quatrième poste 104 est un poste d'injection d'une première partie de pièce, le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette première alternative, on réalise un premier traitement complémentaire avant l'injection de la première partie de pièce, un deuxième traitement complémentaire après l'injection de la première partie de pièce, et un troisième traitement complémentaire après l'assemblage de la première partie de pièce et de la deuxième partie de pièce dans la deuxième zone de transfert et/ou d'assemblage T2. Les premier, deuxième et troisième traitements complémentaires peuvent être différents ou identiques. Le reste du procédé reste similaire à celui de la septième variante.

Dans une deuxième alternative de la septième variante du premier mode de réalisation, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste d'injection d'une deuxième partie de pièce, le troisième poste 103 est un poste d'éjection, le cinquième poste 105 est un poste d'injection d'une première partie de pièce, le quatrième poste 104 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette deuxième alternative, on réalise un premier et un deuxième traitements complémentaires avant l'injection de la première partie de pièce, et un troisième traitement complémentaire après l'assemblage de la première partie de pièce et de la deuxième partie de pièce dans la deuxième zone de transfert et/ou d'assemblage T2. Les premier, deuxième et troisième traitements complémentaires peuvent être différents ou identiques. Le reste du procédé reste similaire à celui de la septième variante.

Dans une troisième alternative de la septième variante du premier mode de réalisation, le premier poste 101 est un poste d'injection d'une première partie de pièce, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'injection d'une deuxième partie de pièce, le sixième poste 106 est un poste d'éjection, le quatrième poste 104 et le cinquième poste 105 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette troisième alternative, on réalise un premier et un deuxième traitements complémentaires après l'injection de la première partie de pièce, et un troisième traitement complémentaire après l'injection de la deuxième partie de pièce et avant l'assemblage de la première partie de pièce et de la deuxième partie de pièce dans la deuxième zone de transfert et/ou d'assemblage T2. Les premier, deuxième et troisième traitements complémentaires peuvent être différents ou identiques. Le reste du procédé reste similaire à celui de la septième variante.

Dans une quatrième alternative de la septième variante du premier mode de réalisation, le premier poste 101 est un poste d'injection d'une première partie de pièce, le deuxième poste 102 est un poste d'injection d'une deuxième partie de pièce, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le sixième poste 106 est un poste d'éjection, le quatrième poste 104 et le cinquième poste 105 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette quatrième alternative, on réalise un premier et un deuxième traitements complémentaires après l'injection de la première partie de pièce, et un troisième traitement complémentaire avant l'injection de la deuxième partie de pièce et avant l'assemblage de la première partie de pièce et de la deuxième partie de pièce dans la deuxième zone de transfert et/ou d'assemblage T2. Les premier, deuxième et troisième traitements complémentaires peuvent être différents ou identiques. Le reste du procédé reste similaire à celui de la septième variante.

Selon l'invention, d'autres alternatives sont possibles en combinant notamment la première alternative ou la deuxième alternative respectivement avec la troisième ou la quatrième alternative ou inversement.

Une huitième variante non représentée du premier mode de réalisation du moule d'injection 1 va maintenant être décrite.

La huitième variante du premier mode de réalisation diffère du premier mode de réalisation en ce que :
- le premier chargeur 5 comprend une troisième partie 5c et une quatrième partie 5d,
- le deuxième chargeur 6 comprend une troisième partie 6c et une quatrième partie 6d,
- le moule d'injection 1 comprend un troisième poste 103, un quatrième poste 104, un cinquième poste 105 et un sixième poste 106.

Le reste des caractéristiques du moule d'injection 1, des premier et deuxième chargeurs 5, 6 et du chargeur de transfert 7 restent les mêmes.

Dans la huitième variante du premier mode de réalisation, le premier poste 101 est un poste d'injection d'une deuxième partie de pièce, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, et le sixième poste 106 est un poste d'injection d'une première partie de pièce.

Dans la huitième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la huitième du premier mode de réalisation, on procède comme décrit ci-après.

On injecte au niveau du sixième poste 106 une première partie de pièce dans une empreinte de moulage 9 de la première partie 5a du premier chargeur 5.

Parallèlement, au niveau du cinquième poste 105, on réalise un premier traitement complémentaire préalable à l'injection de la deuxième partie de pièce, le traitement complémentaire étant réalisé dans une empreinte de moulage 10 de la première partie 6a du deuxième chargeur 6.

Puis le deuxième chargeur 6 effectue une rotation de sorte que la première partie 6a du deuxième chargeur 6 soit positionnée au niveau du quatrième poste 104. Parallèlement, le premier chargeur 5 effectue une rotation de sorte que la première partie 5a du premier chargeur 5 portant la première partie de pièce injectée, soit positionnée au niveau de la première zone de transfert et/ou d'assemblage T1.

L'injection de la première partie de pièce peut être effectuée simultanément ou en décalé par rapport au premier traitement complémentaire. De même les rotations des premier et deuxième chargeurs 5, 6 peuvent réalisées simultanément ou en décalé.

Ensuite, on réalise un deuxième traitement complémentaire préalable à l'injection de la deuxième partie de pièce, le deuxième traitement complémentaire étant réalisé sur le premier traitement complémentaire, par exemple un surmoulage d'une première matière sur la pose d'un insert.

Puis le deuxième chargeur 6 effectue une nouvelle rotation de sorte que la première partie 6a du deuxième chargeur 6 soit positionnée au niveau du premier poste 101. On injecte alors une deuxième partie de pièce dans l'empreinte de moulage 10 de la première partie 6a du deuxième chargeur 6.

Puis, le deuxième chargeur 6 effectue une rotation de sorte que la première partie 6a du deuxième chargeur 6, portant la deuxième partie de pièce injectée, soit positionnée au niveau de la deuxième zone de transfert et/ou d'assemblage T2.

Le chargeur de transfert 7 récupère alors la deuxième partie de pièce dans une empreinte de transfert 11 au niveau de la deuxième zone de transfert et/ou d'assemblage T2.

Le chargeur de transfert 7 effectue ensuite, une rotation de manière à ce que l'empreinte de transfert 11 dans laquelle est positionnée la deuxième partie de pièce soit en regard, au niveau de la première zone de transfert et/ou d'assemblage T1, de l'empreinte de moulage 9 de la première partie 5a du premier chargeur 5 dans laquelle est positionnée la première partie de pièce.

La première partie de pièce et la deuxième partie de pièce sont ensuite assemblées au niveau de la première zone de transfert et/ou d'assemblage T1 dans l'empreinte de moulage 9 de la première partie 5a du premier chargeur 5.

Puis le premier chargeur 5 effectue une rotation de sorte que ladite empreinte de moulage 9 contenant la pièce assemblée, issue de l'assemblage des première et deuxième parties de pièce, soit au niveau du deuxième poste 102. On réalise un troisième traitement complémentaire sur la pièce assemblée au niveau du deuxième poste 102 par exemple un marquage laser, une injection d'une autre matière, etc.

Enfin, le premier chargeur 5 effectue une rotation de manière à ce que la pièce finie positionnée dans l'empreinte de moulage 9 du premier chargeur 5 soit au niveau du poste d'éjection 103 pour être éjectée.

Dans une première alternative de la huitième variante, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'éjection, le quatrième poste 104 est un poste d'injection d'une deuxième partie de pièce, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, et le sixième poste 106 est un poste d'injection d'une première partie de pièce.

Ainsi dans cette première alternative, on réalise un premier traitement complémentaire avant l'injection de la deuxième partie de pièce, un deuxième traitement complémentaire après l'injection de la deuxième partie de pièce et un troisième traitement complémentaire après l'assemblage de la première et de la deuxième parties de pièce au niveau de la première zone de transfert et/ou d'assemblage T1. Le premier, le deuxième et le troisième traitements complémentaires peuvent être différents ou identiques. Le reste du procédé reste similaire à celui de la huitième variante.

Dans une deuxième alternative de la huitième variante, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le cinquième poste 105 est un poste d'injection d'une deuxième partie de pièce, et le sixième poste 106 est un poste d'injection d'une première partie de pièce.

Ainsi dans cette deuxième alternative, on réalise un premier traitement complémentaire et un deuxième traitement complémentaire après l'injection de la deuxième partie de pièce et un troisième traitement complémentaire après l'assemblage de la première et de la deuxième parties de pièce au niveau de la première zone de transfert et/ou d'assemblage T1. Le premier, le deuxième et le troisième traitements complémentaires peuvent être différents ou identiques. Le reste du procédé reste similaire à celui de la huitième variante.

Dans une troisième alternative de la huitième variante, le premier poste 101 est un poste d'injection d'une deuxième partie de pièce, le deuxième poste 102 est un poste d'éjection, le troisième poste 103 est un poste d'injection d'une première partie de pièce, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, et le sixième poste 106 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi dans cette troisième alternative, on réalise un premier traitement complémentaire et un deuxième traitement complémentaire avant l'injection de la deuxième partie de pièce, et un troisième traitement complémentaire après l'injection de la première partie de pièce. Le premier, le deuxième et le troisième traitements complémentaires peuvent être différents ou identiques. Le reste du procédé reste similaire à celui de la huitième variante.

Dans une quatrième alternative de la huitième variante, le premier poste 101 est un poste d'injection d'une deuxième partie de pièce, le deuxième poste 102 est un poste d'éjection, le troisième poste 103 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, et le sixième poste 106 est un poste d'injection d'une première partie de pièce.

Ainsi dans cette quatrième alternative, on réalise un premier traitement complémentaire et un deuxième traitement complémentaire avant l'injection de la deuxième partie de pièce, et un troisième traitement complémentaire avant l'injection de la première partie de pièce. Le premier, le deuxième et le troisième traitements complémentaires peuvent être différents ou identiques. Le reste du procédé reste similaire à celui de la huitième variante.

Selon l'invention, d'autres alternatives sont possibles en combinant notamment la première alternative ou la deuxième alternative respectivement avec la troisième ou la quatrième alternative ou inversement.

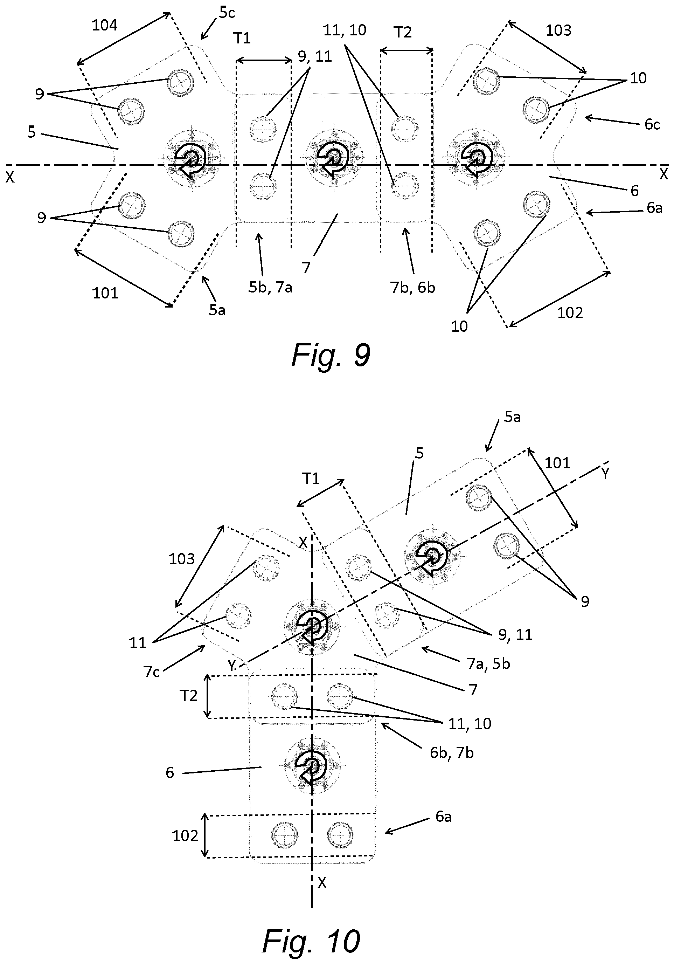

Une neuvième variante du premier mode de réalisation du moule d'injection 1 va maintenant être décrite en référence à la figure 9.

La neuvième variante du premier mode de réalisation diffère du premier mode de réalisation en ce que :
- le premier chargeur 5 comprend une troisième partie 5c,
- le deuxième chargeur 6 comprend une troisième partie 6c,
- le moule d'injection 1 comprend un troisième poste 103 et un quatrième poste 104.

Le reste des caractéristiques du moule d'injection 1, des premier et deuxième chargeurs 5, 6 et du chargeur de transfert 7 restent les mêmes.

Dans la neuvième variante du premier mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans la neuvième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la neuvième variante du premier mode de réalisation, on procède comme décrit ci-après.

On injecte au niveau du premier poste 101 une première partie de pièce dans une empreinte de moulage 9 de la première partie 5a du premier chargeur 5, on injecte simultanément ou légèrement en différé une deuxième partie de pièce dans une empreinte de moulage 10 de la première partie 6a du deuxième chargeur 6 au niveau du deuxième poste d'injection 102.

Puis, le premier chargeur 5 effectue une rotation de sorte que la première partie 5a du premier chargeur 5 portant la première partie de pièce injectée soit positionnée au niveau du quatrième poste 104. On réalise alors au niveau du quatrième poste 104 un traitement complémentaire sur la première partie de pièce injectée.

Ensuite, le premier chargeur 5 et le deuxième chargeur 6 effectuent une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2, les rotations des premier et deuxième chargeurs 5, 6 peuvent être réalisées simultanément ou en différé l'une de l'autre.

Le chargeur de transfert 7 récupère alors la première partie de pièce dans une empreinte de transfert 11 au niveau de la première zone de transfert et/ou d'assemblage T1.

Le chargeur de transfert 7 effectue ensuite, une rotation de manière à ce que l'empreinte de transfert 11 dans laquelle est positionnée la première partie de pièce soit en regard, au niveau de la deuxième zone de transfert et/ou d'assemblage T2, de l'empreinte de moulage 10 de la première partie 6a du deuxième chargeur 6 dans laquelle est positionnée la deuxième partie de pièce.

La première partie de pièce et la deuxième partie de pièce sont ensuite assemblées au niveau de la deuxième zone de transfert et/ou d'assemblage T2 dans l'empreinte de moulage 10 de la première partie 6a du deuxième chargeur 6.

Enfin, le deuxième chargeur 6 effectue une rotation de manière à ce que la première partie 6a du deuxième chargeur 6 portant la pièce finie, issue de l'assemblage des première et deuxième parties de pièce, soit positionnée au niveau du troisième poste 103 afin que la pièce finie soit éjectée.

Dans une première alternative de la neuvième variante du premier mode de réalisation, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste d'injection d'une deuxième partie de pièce, le troisième poste 103 est un poste d'éjection et le quatrième poste 104 est un poste d'injection d'une première partie de pièce.

Ainsi dans cette première alternative, on réalise un traitement complémentaire avant l'injection de la première partie de pièce. Le reste du procédé reste similaire à celui de la neuvième variante.

Une dixième variante non représentée du premier mode de réalisation av maintenant être décrite

La dixième variante du premier mode de réalisation diffère du premier mode de réalisation en ce que :
- le premier chargeur 5 comprend une troisième partie 5c,
- le deuxième chargeur 6 comprend une troisième partie 6c,
- le moule d'injection 1 comprend un troisième poste 103 et un quatrième poste 104.

Le reste des caractéristiques du moule d'injection 1, des premier et deuxième chargeurs 5, 6 et du chargeur de transfert 7 restent les mêmes.

Dans la dixième variante du premier mode de réalisation, le premier poste 101 est un poste d'injection d'une deuxième partie de pièce, le deuxième poste 102 est un poste d'éjection, le troisième poste 103 est un poste d'injection d'une première partie de pièce et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans la dixième variante du premier mode de réalisation, les axes de rotation et de translation du premier chargeur 5, du deuxième chargeur 6 et du chargeur de transfert 7 sont alignés sur l'axe longitudinal X-X du moule d'injection 1.

Pour former une pièce par un procédé d'injection mis en oeuvre par le moule d'injection 1 selon la dixième variante du premier mode de réalisation, on procède comme décrit ci-après.

On injecte une première partie de pièce dans une empreinte de moulage 9 de la première partie 5a du premier chargeur 5 au niveau du troisième poste d'injection 103. Parallèlement, au niveau du quatrième poste 104, on réalise un traitement complémentaire préalable à l'injection de la deuxième partie de pièce dans l'empreinte de moulage 10 de la première partie 6a du deuxième chargeur 6.

Puis, le premier chargeur 5 effectue une rotation de sorte que la première partie 5a du premier chargeur 5 portant la première partie de pièce injectée soit positionnée au niveau du premier poste 101. On injecte alors une deuxième partie de pièce dans une empreinte de moulage 10 de la première partie 6a du deuxième chargeur 6 au niveau du premier poste 101.

Ensuite, le premier chargeur 5 et le deuxième chargeur 6 effectuent une rotation de sorte que la première partie 5a du premier chargeur 5 portant la première partie de pièce injectée, soit positionnée au niveau de la première zone de transfert et/ou d'assemblage T1 et que la première partie 6a du deuxième chargeur 6, portant la deuxième partie de pièce injectée, soit positionnée au niveau de la deuxième zone de transfert et/ou d'assemblage T2, les rotations des premier et deuxième chargeurs 5, 6 peuvent être réalisées simultanément ou en différé l'une de l'autre.

Le chargeur de transfert 7 récupère alors la deuxième partie de pièce dans une empreinte de transfert 11 au niveau de la deuxième zone de transfert et/ou d'assemblage T2.

Le chargeur de transfert 7 effectue ensuite, une rotation de manière à ce que l'empreinte de transfert 11 dans laquelle est positionnée la deuxième partie de pièce soit en regard, au niveau de la première zone de transfert et/ou d'assemblage T1, de l'empreinte de moulage 9 de la première partie 5a du premier chargeur 5 dans laquelle est positionnée la première partie de pièce.

La première partie de pièce et la deuxième partie de pièce sont ensuite assemblées au niveau de la première zone de transfert et/ou d'assemblage T1 dans l'empreinte de moulage 9 de la première partie 5a du premier chargeur 5.

Enfin, le premier chargeur 5effectue une rotation de manière à ce que la première partie 5a du premier chargeur 5 portant la pièce finie, issue de l'assemblage des première et deuxième parties de pièce, soit positionnée au niveau du deuxième poste 102 afin que la pièce finie soit éjectée.

Dans une première alternative de la dixième variante du premier mode de réalisation, le premier poste 101 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le deuxième poste 102 est un poste d'éjection, le troisième poste 103 est un poste d'injection d'une première partie de pièce et le quatrième poste 104 est un poste d'injection d'une deuxième partie de pièce.

Ainsi dans cette première alternative, on réalise un traitement complémentaire avant l'injection de la deuxième partie de pièce. Le reste du procédé reste similaire à celui de la dixième variante.

Un deuxième mode de réalisation du moule d'injection 1 selon l'invention va maintenant être décrit en référence à la figure 10.

Le deuxième mode de réalisation diffère du premier mode de réalisation en ce que :
- le moule d'injection 1 comprend un troisième poste 103,
- le chargeur de transfert 7 comprend un première partie de chargeur 7a, une deuxième partie de chargeur 7b et une troisième partie de chargeur 7c, présentant chacune au moins une empreinte de transfert 11, le chargeur de transfert 7 étant configuré pour se déplacer au moins en rotation entre la première zone de transfert et/ou d'assemblage T1, la deuxième zone de transfert et/ou d'assemblage T2 et le troisième poste 103.

Le reste des caractéristiques du moule d'injection 1 est identique au premier mode de réalisation décrit préalablement.

Ainsi, dans le deuxième mode de réalisation du moule d'injection 1, le premier chargeur 5 comporte une première partie 5a présentant au moins une première empreinte de moulage 9 et une deuxième partie 5b comprenant au moins une deuxième empreinte de moulage 9. Le premier chargeur 5 est configuré pour se déplacer au moins en rotation entre le premier poste 101 et la première zone de transfert et/ou d'assemblage T1. En outre, le deuxième chargeur 6 comporte une première partie 6a présentant au moins une première empreinte de moulage 10 et une deuxième partie 6b comprenant au moins une deuxième empreinte de moulage 10. Le deuxième chargeur 6 est configuré pour se déplacer au moins en rotation entre le deuxième poste 102 et la deuxième zone de transfert et/ou d'assemblage T2.

Dans le deuxième mode de réalisation, le premier poste 101 est un poste d'injection d'une première partie de pièce, le deuxième poste 102 est un poste d'injection d'une deuxième partie de pièce et le troisième poste 103 est un poste d'éjection.

Dans le deuxième mode de réalisation, les axes de rotation et de translation du premier chargeur 5 et du chargeur de transfert 7 sont alignés sur l'axe longitudinal X-X du moule d'injection 1. De plus, les axes de rotation et de translation du deuxième chargeur 6 et du chargeur de transfert 7 sont alignés sur un axe Y-Y sécant à l'axe longitudinal X-X du moule d'injection 1.

Pour former une pièce par un procédé d'injection mis en oeuvre par le moule d'injection 1 selon le deuxième mode de réalisation, on injecte au niveau du premier poste 101 une première partie de pièce dans une empreinte de moulage 9 du premier chargeur 5, on injecte simultanément ou légèrement en différé une deuxième partie de pièce dans une empreinte de moulage 10 du deuxième chargeur 6 au niveau du deuxième poste 102.

Puis, le premier chargeur 5 et le deuxième chargeur 6 effectuent une rotation de sorte que la première partie 5a du premier chargeur 5 portant la première partie de pièce injectée soit positionnée au niveau de la première zone de transfert et/ou d'assemblage T1 et que la première partie 6a du deuxième chargeur 6 portant la deuxième partie de pièce injectée soit positionnée au niveau de la deuxième zone de transfert et/ou d'assemblage T2, les rotations des premier et deuxième chargeurs 5, 6 peuvent réalisées simultanément ou en différé l'une de l'autre.

Le chargeur de transfert 7 récupère la première partie de pièce du premier chargeur 5 dans une empreinte de transfert 11 de la première partie de chargeur 7a du chargeur de transfert 7 et effectue une rotation de manière à ce que l'empreinte de transfert 11 de la première partie de chargeur 7a du chargeur de transfert 7 dans laquelle est positionnée la première partie de pièce soit en regard, au niveau de la deuxième zone de transfert et/ou d'assemblage T2, de l'empreinte de moulage 10 du deuxième chargeur 6 dans laquelle est positionnée la deuxième partie de pièce. La première partie de pièce et la deuxième partie de pièce sont ensuite assemblées au niveau de la deuxième zone de transfert et/ou d'assemblage T2 dans l'empreinte de transfert 11.

Enfin, le chargeur de transfert 7 effectue une rotation de manière à ce que l'empreinte de transfert 11 de la première partie de chargeur 7a du chargeur de transfert 7, dans laquelle la pièce assemblée, issue de l'assemblage de la première partie de pièce et de la deuxième partie de pièce, soit positionnée au niveau du troisième poste 103 pour être éjectée.

Bien entendu, si on inverse le sens de rotation du chargeur de transfert 7, l'assemblage de la première partie de pièce et de la deuxième partie de pièce est réalisé au niveau de la première zone de transfert et/ou d'assemblage T1.

Dans une première alternative du deuxième mode de réalisation, le troisième poste 103 est un poste d'injection d'une troisième partie de pièce par exemple.

Ainsi, pour former une pièce par un procédé d'injection mis en oeuvre par le moule d'injection 1 selon la première alternative du deuxième mode de réalisation, on injecte au niveau du premier poste 101 une première partie de pièce dans une empreinte de moulage 9 du premier chargeur 5, on injecte simultanément ou légèrement en différé une deuxième partie de pièce dans une empreinte de moulage 10 du deuxième chargeur 6 au niveau du deuxième poste 102 et on injecte simultanément ou légèrement en différé une troisième partie de pièce dans une empreinte de transfert 11 du chargeur de transfert 7 au niveau du troisième poste 103.

Puis, le premier chargeur 5 et le deuxième chargeur 6 effectue une rotation de sorte que la première partie 5a du premier chargeur 5 portant la première partie de pièce injectée soit positionnée au niveau de la première zone de transfert et/ou d'assemblage T1 et que la première partie 6a du deuxième chargeur 6 portant la deuxième partie de pièce injectée soit positionnée au niveau de la deuxième zone de transfert et/ou d'assemblage T2.

Le chargeur de transfert 7 effectue alors une rotation de sorte que l'empreinte de transfert 11, dans laquelle la troisième partie de pièce injectée au troisième poste d'injection est agencée, soit positionnée en regard de l'empreinte de moulage 9 du premier chargeur 5 dans laquelle la première partie de pièce est agencée, au niveau de la première zone de transfert et/ou d'assemblage T1. La troisième partie de pièce et la première partie de pièce sont assemblées au niveau de ladite première zone de transfert et/ou d'assemblage T1, dans l'empreinte de transfert 11.

Puis, le chargeur de transfert 7 effectue une nouvelle rotation de sorte que l'empreinte de transfert 11 contenant la préforme issue de l'assemblage de la troisième partie de pièce et de la première partie de pièce, soit en regard de l'empreinte de moulage 10 du deuxième chargeur 6 contenant la deuxième partie de pièce est positionnée au niveau de la deuxième zone de transfert et/ou d'assemblage T2. La préforme et la deuxième partie de pièce sont assemblées au niveau de ladite deuxième zone de transfert et/ou d'assemblage T2, afin de former une pièce finie qui sera ensuite éjectée par un bras ou autre dispositif d'éjection.

Les variantes du deuxième mode de réalisation décrites ci-après sont une reprise des variantes décrites pour le deuxième mode de réalisation. Les caractéristiques et procédés d'injections y relatifs ne seront donc pas développés en détail puisque le fonctionnement des variantes du premier mode de réalisation est transposable aux variantes du deuxième mode de réalisation à la lumière du fonctionnement du deuxième mode de réalisation.

Ainsi, la première variante du deuxième mode de réalisation diffère du deuxième mode de réalisation en ce que :
- le premier chargeur 5 comprend une troisième partie 5c,
- le moule d'injection 1 comprend un quatrième poste 104.

Le reste des caractéristiques du moule d'injection 1, des premier et deuxième chargeurs 5, 6 et du chargeur de transfert 7 restent les mêmes que celles du deuxième mode de réalisation.

Dans la première variante du deuxième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette première variante, il faut se rapprocher de la première variante illustrée en figure 5 du premier mode de réalisation à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette première variante mais forcément pour les alternatives applicables.

Ainsi, le premier chargeur 5 est mobile en rotation entre le quatrième poste 104 au niveau duquel un traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7. Le deuxième chargeur 6 est mobile en rotation entre le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées. Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la première variante et d'autres alternatives sont possibles notamment par la transposition des alternatives prévues pour la première variante du premier mode de réalisation.

La deuxième première variante du deuxième mode de réalisation diffère du deuxième mode de réalisation en ce que :
- le deuxième chargeur 6 comprend une troisième partie 6c,
- le moule d'injection 1 comprend un quatrième poste 104.

Le reste des caractéristiques du moule d'injection 1, des premier et deuxième chargeurs 5, 6 et du chargeur de transfert 7 restent les mêmes que celles du deuxième mode de réalisation.

Dans la deuxième variante du deuxième mode de réalisation, le premier poste 101 est un poste d'injection d'une deuxième partie de pièce, le deuxième poste 102 est un poste d'injection d'une première partie de pièce, le troisième poste 103 est un poste d'éjection et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette deuxième variante, il faut se rapprocher de la deuxième variante du premier mode de réalisation non représentée, à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette deuxième variante mais forcément pour les alternatives applicables.

Ainsi, le deuxième chargeur 6 est mobile en rotation entre le quatrième poste 104 au niveau duquel un traitement complémentaire est réalisé préalablement à l'injection de la deuxième partie de pièce, le premier poste 101 au niveau de laquelle la deuxième partie de pièce est injectée et la deuxième zone de transfert et/ou d'assemblage T2 la première partie de pièce et la deuxième partie de pièce sont assemblées. Le premier chargeur 5 est mobile en rotation entre le deuxième poste 102 au niveau duquel la première partie de pièce est injectée et la première zone de transfert et/ou d'assemblage T2 au niveau de laquelle la première partie de pièce est transférée sur le chargeur de transfert 7. Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la deuxième variante et d'autres alternatives sont possibles notamment par la transposition des alternatives prévues pour la deuxième variante du premier mode de réalisation.

La troisième variante du deuxième mode de réalisation diffère du deuxième mode de réalisation en ce que :
- le premier chargeur 5 comprend une troisième partie 5c,
- le deuxième chargeur 6 comprend une troisième partie 6c,
- le moule d'injection 1 comprend un quatrième poste 104 et un cinquième poste 105.

Le reste des caractéristiques du moule d'injection 1, des premier et deuxième chargeurs 5, 6 et du chargeur de transfert 7 restent les mêmes que celles du deuxième mode de réalisation.

Dans la troisième variante du deuxième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette troisième variante, il faut se rapprocher de la neuvième variante illustrée en figure 9 du premier mode de réalisation et de la dixième variante du premier mode de réalisation non représentée, à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette troisième variante mais forcément pour les alternatives applicables.

Ainsi, le premier chargeur 5 est mobile en rotation entre le quatrième poste 104 au niveau duquel un traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le cinquième poste 105 au niveau duquel un traitement complémentaire est réalisé préalablement à l'injection de la deuxième partie de pièce, le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la troisième variante et d'autres alternatives sont possibles notamment par la transposition des alternatives prévues pour la neuvième variante du premier mode de réalisation et pour la dixième variante du premier mode de réalisation.

La quatrième variante du deuxième mode de réalisation diffère du deuxième mode de réalisation en ce que :
- le premier chargeur 5 comprend une troisième partie 5c et une quatrième partie 5d,
- le moule d'injection 1 comprend un quatrième poste 104 et un cinquième poste 105.

Le reste des caractéristiques du moule d'injection 1, des premier et deuxième chargeurs 5, 6 et du chargeur de transfert 7 restent les mêmes que celles du deuxième mode de réalisation.

Dans la quatrième variante du deuxième mode de réalisation, le premier poste 101 est un poste d'injection d'une première partie de pièce, le deuxième poste 102 est un poste d'injection d'une deuxième partie de pièce, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette quatrième variante, il faut se rapprocher de la troisième variante illustrée en figure 5 du premier mode de réalisation à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette quatrième variante mais forcément pour les alternatives applicables.

Ainsi, le premier chargeur 5 est mobile en rotation entre le quatrième poste 104 au niveau duquel un premier traitement complémentaire est réalisé préalablement à l'injection de la première partie de pièce, le cinquième poste 105 au niveau duquel un deuxième traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la quatrième variante et d'autres alternatives sont possibles notamment par la transposition des alternatives prévues pour la troisième variante du premier mode de réalisation.

La cinquième variante du deuxième mode de réalisation diffère du deuxième mode de réalisation en ce que :
- le deuxième chargeur 6 comprend une troisième partie 6c et une quatrième partie 6c,
- le moule d'injection 1 comprend un quatrième poste 104 et un cinquième poste 105.

Le reste des caractéristiques du moule d'injection 1, des premier et deuxième chargeurs 5, 6 et du chargeur de transfert 7 restent les mêmes que celles du deuxième mode de réalisation.

Dans la cinquième variante du deuxième mode de réalisation, le premier poste 101 est un poste d'injection d'une deuxième partie de pièce, le deuxième poste 102 est un poste d'injection d'une première partie de pièce, le troisième poste 103 est un poste d'éjection, le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière, le cinquième poste 105 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette cinquième variante, il faut se rapprocher de la quatrième variante du premier mode de réalisation non représentée à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette cinquième variante mais forcément pour les alternatives applicables.

Ainsi, le deuxième chargeur 6 est mobile en rotation entre le quatrième poste 104 au niveau duquel un premier traitement complémentaire est réalisé préalablement à l'injection de la deuxième partie de pièce, le cinquième poste 105 au niveau duquel un deuxième traitement complémentaire est réalisé préalablement à l'injection de la deuxième partie de pièce, le premier poste 101 au niveau duquel la deuxième partie de pièce est injectée et la deuxième zone de transfert et/ou d'assemblage T2 au niveau de laquelle la première partie de pièce et la deuxième partie de pièce sont assemblées.

Le premier chargeur 5 est mobile en rotation entre le deuxième poste 102 au niveau duquel la première partie de pièce est injectée et la première zone de transfert et/ou d'assemblage T1 au niveau de laquelle la première partie de pièce est transférée sur le chargeur de transfert 7.

Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la cinquième variante et d'autres alternatives sont possibles notamment par la transposition des alternatives prévues pour la quatrième variante du premier mode de réalisation.

La sixième variante du deuxième mode de réalisation diffère du deuxième mode de réalisation en ce que :
- le premier chargeur 5 comprend une troisième partie 5c et une quatrième partie 5c,
- le deuxième chargeur 6 comprend une troisième partie 6c,
- le moule d'injection 1 comprend un quatrième poste 104, un cinquième poste 105 et un sixième poste 106.

Le reste des caractéristiques du moule d'injection 1, des premier et deuxième chargeurs 5, 6 et du chargeur de transfert 7 restent les mêmes que celles du deuxième mode de réalisation.

Dans la sixième variante du deuxième mode de réalisation, le premier poste 101 est un poste d'injection d'une première partie de pièce, le deuxième poste 102 est un poste d'injection d'une deuxième partie de pièce, le troisième poste 103 est un poste d'éjection, le quatrième poste, le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette sixième variante, il faut se rapprocher de la cinquième variante illustrée en figure 7 du premier mode de réalisation à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette cinquième variante mais forcément pour les alternatives applicables.

Ainsi, le premier chargeur 5 est mobile en rotation entre le quatrième poste 104 au niveau duquel un premier traitement complémentaire est réalisé préalablement à l'injection de la première partie de pièce, le cinquième poste 105 au niveau duquel un deuxième traitement complémentaire est réalisé préalablement à l'injection de la première partie de pièce, et le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le sixième poste 106 au niveau duquel un traitement complémentaire est réalisé préalablement à l'injection de la deuxième partie de pièce, le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la sixième variante et d'autres alternatives sont possibles notamment par la transposition des alternatives prévues pour la cinquième variante du premier mode de réalisation.

La septième variante du deuxième mode de réalisation diffère du deuxième mode de réalisation en ce que :
- le premier chargeur 5 comprend une troisième partie 5c,
- le deuxième chargeur 6 comprend une troisième partie 6c et une quatrième partie 6d,
- le moule d'injection 1 comprend un quatrième poste 104, un cinquième poste 105, un sixième poste 106.

Le reste des caractéristiques du moule d'injection 1, des premier et deuxième chargeurs 5, 6 et du chargeur de transfert 7 restent les mêmes que celles du deuxième mode de réalisation.

Dans la septième variante du deuxième mode de réalisation, le premier poste 101 est un poste d'injection d'une deuxième partie de pièce, le deuxième poste 102 est un poste d'injection d'une première partie de pièce, le troisième poste 103 est un poste d'éjection, le quatrième poste, le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le quatrième poste 104 au niveau duquel un premier traitement complémentaire est réalisé préalablement à l'injection de la première partie de pièce, le cinquième poste 105 au niveau duquel un deuxième traitement complémentaire est réalisé préalablement à l'injection de la première partie de pièce, et le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le sixième poste 106 au niveau duquel un traitement complémentaire est réalisé préalablement à l'injection de la deuxième partie de pièce, le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées. Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

Pour comprendre le fonctionnement de cette septième variante, il faut se rapprocher de la sixième variante non représentée du premier mode de réalisation à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette septième variante mais forcément pour les alternatives applicables.

Ainsi, le deuxième chargeur 6 est mobile en rotation entre le quatrième poste 104 au niveau duquel un premier traitement complémentaire est réalisé préalablement à l'injection de la deuxième partie de pièce, le cinquième poste 105 au niveau duquel un deuxième traitement complémentaire est réalisé préalablement à l'injection de la deuxième partie de pièce, et le premier poste 101 au niveau duquel la deuxième partie de pièce est injectée et la deuxième zone de transfert et/ou d'assemblage T2 au niveau de laquelle la première partie de pièce et la deuxième partie de pièce sont assemblées.

Le premier chargeur 5 est mobile en rotation entre le sixième poste 106 au niveau duquel un traitement complémentaire est réalisé préalablement à l'injection de la première partie de pièce, le deuxième poste 102 au niveau duquel la première partie de pièce est injectée et la première zone de transfert et/ou d'assemblage T1 au niveau de laquelle la première partie de pièce est transférée sur le chargeur de transfert 7.

Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la septième variante et d'autres alternatives sont possibles notamment par la transposition des alternatives prévues pour la sixième variante du premier mode de réalisation.

La huitième variante du deuxième mode de réalisation diffère du deuxième mode de réalisation en ce que :
- le premier chargeur 5 comprend une troisième partie 5c et une quatrième partie 5d,
- le deuxième chargeur 6 comprend une troisième partie 6c et une quatrième partie 6d,
- le moule d'injection 1 comprend un quatrième poste 104, un cinquième poste 105, un sixième poste 106 et un septième poste 107.

Le reste des caractéristiques du moule d'injection 1, des premier et deuxième chargeurs 5, 6 et du chargeur de transfert 7 restent les mêmes que celles du deuxième mode de réalisation.

Dans la huitième variante du deuxième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième 104, le cinquième 105, le sixième 106 et le septième 107 postes sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Pour comprendre le fonctionnement de cette huitième variante, il faut se rapprocher de la septième variante du premier mode de réalisation illustrée en figure 7 et de la huitième variante du premier mode de réalisation non représentée à la lumière du deuxième mode de réalisation illustré en figure 10. En effet, dans ces variantes, bien que les chargeurs soient ne soient pas similaires, le moule d'injection 1 fonctionne sensiblement de la même manière à l'exception de l'éjection qui se fait au niveau du chargeur de transfert 7 pour cette huitième variante mais forcément pour les alternatives applicables.

Ainsi, le premier chargeur 5 est mobile en rotation entre le quatrième poste 104 au niveau duquel un premier traitement complémentaire est réalisé préalablement à l'injection de la première partie de pièce, le cinquième poste 105 au niveau duquel un deuxième traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le sixième poste 106 au niveau duquel un premier traitement complémentaire est réalisé préalablement à l'injection de la deuxième partie de pièce, le septième poste 107 au niveau duquel un deuxième traitement complémentaire est réalisé préalablement à l'injection de la deuxième partie de pièce, le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, la deuxième zone de transfert et/ou d'assemblage T2 et le troisième poste 103 au niveau duquel la pièce finie est éjectée.

L'alternative prévue pour le deuxième mode de réalisation est applicable à la huitième variante et d'autres alternatives sont possibles notamment par la transposition des alternatives prévues pour la septième variante et la huitième variante du premier mode de réalisation.

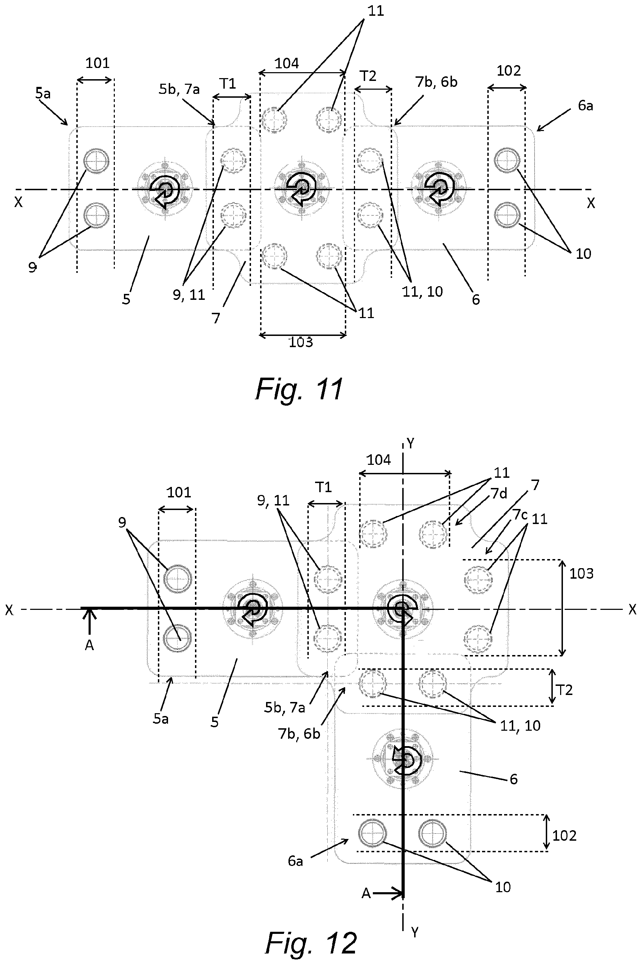

Un troisième mode de réalisation du moule d'injection 1 selon l'invention va maintenant être décrit en référence à la figure 11.

Le troisième mode de réalisation diffère du premier mode de réalisation en ce que :
- le moule d'injection 1 comprend un troisième poste 103, un quatrième poste 104,
- le chargeur de transfert 7 comprend un première partie de chargeur 7a, une deuxième partie de chargeur 7b, une troisième partie de chargeur 7c, et une quatrième partie 7d, présentant chacune au moins une empreinte de transfert 11, le chargeur de transfert 7 étant configuré pour se déplacer au moins en rotation entre la première zone de transfert et/ou d'assemblage T1, la deuxième zone de transfert et/ou d'assemblage T2, le troisième poste 103 et le quatrième poste 104.

Le reste des caractéristiques du moule d'injection 1 est identique au premier mode de réalisation décrit préalablement.

Ainsi, dans le troisième mode de réalisation du moule d'injection 1, le premier chargeur 5 comporte une première partie 5a présentant au moins une première empreinte de moulage 9 et une deuxième partie 5b comprenant au moins une deuxième empreinte de moulage 9. Le premier chargeur 5 est configuré pour se déplacer au moins en rotation entre le premier poste 101 et la première zone de transfert et/ou d'assemblage T1. En outre, le deuxième chargeur 6 comporte une première partie 6a présentant au moins une première empreinte de moulage 10 et une deuxième partie 6b comprenant au moins une deuxième empreinte de moulage 10. Le deuxième chargeur 6 est configuré pour se déplacer au moins en rotation entre le deuxième poste 102 et la deuxième zone de transfert et/ou d'assemblage T2.

Dans le troisième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 est un poste de refroidissement ou de réchauffement ou de pose d'insert ou d'encliquetage ou de soudure miroir ou de soudure par joint surmoulé ou de pose d'un décor ou de marquage laser ou d'injection d'une autre matière.

Dans le troisième mode de réalisation, les axes de rotation et de translation du premier chargeur 5, du chargeur de transfert 7 et du deuxième chargeur 6 sont alignés sur l'axe longitudinal X-X du moule d'injection 1.

Pour former une pièce par un procédé d'injection mis en oeuvre par le moule d'injection 1 selon le troisième mode de réalisation, on injecte au niveau du premier poste 101 une première partie de pièce dans une empreinte de moulage 9 du premier chargeur 5, on injecte simultanément ou légèrement en différé une deuxième partie de pièce dans une empreinte de moulage 10 du deuxième chargeur 6 au niveau du deuxième poste 102.

Puis, le premier chargeur 5 et le deuxième chargeur 6 effectuent une rotation de sorte que la première partie 5a du premier chargeur 5 portant la première partie de pièce injectée soit positionnée au niveau de la première zone de transfert et/ou d'assemblage T1 et que la première partie 6a du deuxième chargeur 6 portant la deuxième partie de pièce injectée soit positionnée au niveau de la deuxième zone de transfert et/ou d'assemblage T2, les rotations des premier et deuxième chargeurs 5, 6 peuvent réalisées simultanément ou en différé l'une de l'autre.

Le chargeur de transfert 7 récupère la première partie de pièce du premier chargeur 5 dans une empreinte de transfert 11 de la première partie de chargeur 7a du chargeur de transfert 7 et effectue une rotation de manière à ce que l'empreinte de transfert 11 de la première partie de chargeur 7a du chargeur de transfert 7 dans laquelle est positionnée la première partie de pièce soit positionnée au niveau du quatrième poste 104. On réalise alors un traitement complémentaire sur la première partie de pièce injectée au niveau dudit quatrième poste 104 dans l'empreinte de transfert 11.

Puis le chargeur de transfert 7 effectue une nouvelle rotation de sorte que l'empreinte de transfert 11 de la première partie de chargeur 7a du chargeur de transfert 7 dans laquelle est positionnée la première partie de pièce injectée et traitée, soit en regard, au niveau de la deuxième zone de transfert et/ou d'assemblage T2, de l'empreinte de moulage 10 du deuxième chargeur 6 dans laquelle est positionnée la deuxième partie de pièce. La première partie de pièce et la deuxième partie de pièce sont ensuite assemblées au niveau de la deuxième zone de transfert et/ou d'assemblage T2 dans l'empreinte de transfert 11.

Enfin, le chargeur de transfert 7 effectue une rotation de manière à ce que l'empreinte de transfert 11 de la première partie de chargeur 7a du chargeur de transfert 7, dans laquelle la pièce assemblée, issue de l'assemblage de la première partie de pièce et de la deuxième partie de pièce, soit positionnée au niveau du troisième poste 103 pour être éjectée.

Bien entendu, si on inverse le sens de rotation du chargeur de transfert 7, le traitement complémentaire est réalisé sur la deuxième partie de pièce, et l'assemblage de la première partie de pièce et de la deuxième partie de pièce est réalisé au niveau de la première zone de transfert et/ou d'assemblage T1.

La première variante du troisième mode de réalisation diffère du troisième mode de réalisation en ce que :
- le premier chargeur 5 comprend une troisième partie 5c,
- le moule d'injection 1 comprend un cinquième poste 105.

Le reste des caractéristiques du moule d'injection 1, des premier et deuxième chargeurs 5, 6 et du chargeur de transfert 7 restent les mêmes que celles du troisième mode de réalisation.

Dans la première variante du troisième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 et le cinquième poste 105 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le cinquième poste 105 au niveau duquel un premier traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, le quatrième poste 104 au niveau duquel un deuxième traitement complémentaire est réalisé sur la première partie de pièce injectée, traitée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La deuxième variante du troisième mode de réalisation diffère du troisième mode de réalisation en ce que :
- le deuxième chargeur 6 comprend une troisième partie 6c,
- le moule d'injection 1 comprend un cinquième poste 105.

Le reste des caractéristiques du moule d'injection 1, des premier et deuxième chargeurs 5, 6 et du chargeur de transfert 7 restent les mêmes que celles du troisième mode de réalisation.

Dans la deuxième variante du troisième mode de réalisation, le premier poste 101 est un poste d'injection d'une deuxième partie de pièce, le deuxième poste 102 est un poste d'injection d'une première partie de pièce, le troisième poste 103 est un poste d'éjection et le quatrième poste 104 et le cinquième poste 105 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le deuxième chargeur 6 est mobile en rotation entre le cinquième poste 105 au niveau duquel un premier traitement complémentaire est réalisé préalablement à l'injection de la deuxième partie de pièce, le premier poste 101 au niveau duquel la deuxième partie de pièce est injectée et la deuxième zone de transfert et/ou d'assemblage T2 au niveau de laquelle la première partie de pièce et la deuxième partie de pièce sont assemblées.

Le premier chargeur 5 est mobile en rotation entre le deuxième poste 102 au niveau duquel la première partie de pièce est injectée et la première zone de transfert et/ou d'assemblage T1 au niveau de laquelle la première partie de pièce est transférée sur le chargeur de transfert 7.

Le chargeur de transfert 7 est mobile en rotation entre la première zone de transfert et/ou d'assemblage T1, le quatrième poste 104 au niveau duquel un premier traitement complémentaire est réalisé sur la première partie de pièce injectée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La troisième variante du troisième mode de réalisation diffère du troisième mode de réalisation en ce que :
- le premier chargeur 5 comprend une troisième partie 5c,
- le deuxième chargeur 6 comprend une troisième partie 6c,
- le moule d'injection 1 comprend un cinquième poste 105 et un sixième poste 106.

Le reste des caractéristiques du moule d'injection 1, des premier et deuxième chargeurs 5, 6 et du chargeur de transfert 7 restent les mêmes que celles du troisième mode de réalisation.

Dans la troisième variante du troisième mode de réalisation, le premier poste 101 est un poste d'injection d'une deuxième partie de pièce, le deuxième poste 102 est un poste d'injection d'une première partie de pièce, le troisième poste 103 est un poste d'éjection et le quatrième poste 104, le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le cinquième poste 105 au niveau duquel un premier traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le sixième poste 106 au niveau duquel un premier traitement complémentaire est réalisé préalablement à l'injection de la deuxième partie de pièce, le premier poste 101 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, le quatrième poste 104 au niveau duquel un deuxième traitement complémentaire est réalisé sur la première partie de pièce injectée, traitée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Bien entendu, si on inverse le sens de rotation du chargeur de transfert 7, le chargeur de transfert 7 est mobile en rotation entre la deuxième zone de transfert et/ou d'assemblage T2, le quatrième poste 104 au niveau duquel un deuxième traitement complémentaire est réalisé sur la deuxième partie de pièce injectée, traitée et transférée, la première zone de transfert et/ou d'assemblage T1 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La quatrième variante du troisième mode de réalisation diffère du troisième mode de réalisation en ce que :
- le premier chargeur 5 comprend une troisième partie 5c et une quatrième partie 5d,
- le moule d'injection 1 comprend un cinquième poste 105 et un sixième poste 106.

Le reste des caractéristiques du moule d'injection 1, des premier et deuxième chargeurs 5, 6 et du chargeur de transfert 7 restent les mêmes que celles du troisième mode de réalisation.

Dans la quatrième variante du troisième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 et le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le cinquième poste 105 au niveau duquel un premier traitement complémentaire est réalisé préalablement à l'injection de la première partie de pièce, le sixième poste 106 au niveau duquel un deuxième traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, le quatrième poste 104 au niveau duquel un troisième traitement complémentaire est réalisé sur la première partie de pièce injectée, traitée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Bien entendu, si on inverse le sens de rotation du chargeur de transfert 7, le chargeur de transfert 7 est mobile en rotation entre la deuxième zone de transfert et/ou d'assemblage T2 au niveau de laquelle la deuxième partie de pièce est transférée, le quatrième poste 104 au niveau duquel un premier traitement complémentaire est réalisé sur la deuxième partie de pièce injectée, la première zone de transfert et/ou d'assemblage T1 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La cinquième variante du troisième mode de réalisation diffère du troisième mode de réalisation en ce que :
- le deuxième chargeur 6 comprend une troisième partie 6c et une quatrième partie 6d,
- le moule d'injection 1 comprend un cinquième poste 105 et un sixième poste 106.

Le reste des caractéristiques du moule d'injection 1, des premier et deuxième chargeurs 5, 6 et du chargeur de transfert 7 restent les mêmes que celles du troisième mode de réalisation.

Dans la cinquième variante du troisième mode de réalisation, le premier poste 101 est un poste d'injection d'une deuxième partie de pièce, le deuxième poste 102 est un poste d'injection d'une première partie de pièce, le troisième poste 103 est un poste d'éjection et le quatrième poste 104 et le cinquième poste 105 et le sixième poste 106 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le deuxième chargeur 6 est mobile en rotation entre le cinquième poste 105 au niveau duquel un premier traitement complémentaire est réalisé préalablement à l'injection de la deuxième partie de pièce, le sixième poste 106 au niveau duquel un deuxième traitement complémentaire est réalisé préalablement à l'injection de la deuxième partie de pièce, le premier poste 101 au niveau duquel la deuxième partie de pièce est injectée et la deuxième zone de transfert et/ou d'assemblage T2 au niveau de laquelle la première partie de pièce et la deuxième partie de pièce sont assemblées.

Le premier chargeur 5 est mobile en rotation entre le deuxième poste 102 au niveau duquel la première partie de pièce est injectée et la première zone de transfert et/ou d'assemblage T1 au niveau de laquelle la première partie de pièce est transférée sur le chargeur de transfert 7.

Le chargeur de transfert 7 est mobile en rotation entre la première zone de transfert et/ou d'assemblage T1, le quatrième poste 104 au niveau duquel un premier traitement complémentaire est réalisé sur la première partie de pièce injectée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Bien entendu, si on inverse le sens de rotation du chargeur de transfert 7, le chargeur de transfert 7 est mobile en rotation entre la deuxième zone de transfert et/ou d'assemblage T2 au niveau de laquelle la deuxième partie de pièce est transférée, le quatrième poste 104 au niveau duquel un troisième traitement complémentaire est réalisé sur la deuxième partie de pièce injectée et traitée, la première zone de transfert et/ou d'assemblage T1 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La sixième variante du troisième mode de réalisation diffère du troisième mode de réalisation en ce que :
- le premier chargeur comprend une troisième partie 5c et une quatrième partie 5d,
- le deuxième chargeur 6 comprend une troisième partie 6c,
- le moule d'injection 1 comprend un cinquième poste 105 et un sixième poste 106 et un septième poste 107.

Le reste des caractéristiques du moule d'injection 1, des premier et deuxième chargeurs 5, 6 et du chargeur de transfert 7 restent les mêmes que celles du troisième mode de réalisation.

Dans la sixième variante du troisième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 et le cinquième poste 105, le sixième poste 106 et le septième poste 107 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le cinquième poste 105 au niveau duquel un premier traitement complémentaire est réalisé préalablement à l'injection de la première partie de pièce, le sixième poste 106 au niveau duquel un deuxième traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le septième poste 107 au niveau duquel un premier traitement complémentaire est réalisé préalablement à l'injection de la deuxième partie de pièce, le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, le quatrième poste 104 au niveau duquel un troisième traitement complémentaire est réalisé sur la première partie de pièce injectée, traitée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Bien entendu, si on inverse le sens de rotation du chargeur de transfert 7, le chargeur de transfert 7 est mobile en rotation entre la deuxième zone de transfert et/ou d'assemblage T2 au niveau de laquelle la deuxième partie de pièce est transférée, le quatrième poste 104 au niveau duquel un deuxième traitement complémentaire est réalisé sur la deuxième partie de pièce injectée, la première zone de transfert et/ou d'assemblage T1 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La septième variante du troisième mode de réalisation diffère du troisième mode de réalisation en ce que :
- le premier chargeur 5 comprend une troisième partie 5c,
- le deuxième chargeur 6 comprend une troisième partie 6c et une quatrième partie 6d,
- le moule d'injection 1 comprend un cinquième poste 105 et un sixième poste 106 et un septième poste 107.

Le reste des caractéristiques du moule d'injection 1, des premier et deuxième chargeurs 5, 6 et du chargeur de transfert 7 restent les mêmes que celles du troisième mode de réalisation.

Dans la septième variante du troisième mode de réalisation, le premier poste 101 est un poste d'injection d'une deuxième partie de pièce, le deuxième poste 102 est un poste d'injection d'une première partie de pièce, le troisième poste 103 est un poste d'éjection et le quatrième poste 104 et le cinquième poste 105, le sixième poste 106 et le septième poste 107 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le septième poste 107 au niveau duquel un premier traitement complémentaire est réalisé préalablement à l'injection de la première partie de pièce, le deuxième poste 102 au niveau duquel la première partie de pièce est injectée et la première zone de transfert et/ou d'assemblage T1 au niveau de laquelle la première partie de pièce est transférée sur le chargeur de transfert 7,

Le deuxième chargeur 6 est mobile en rotation entre le cinquième poste 105 au niveau duquel un premier traitement complémentaire est réalisé préalablement à l'injection de la deuxième partie de pièce, le sixième poste 106 au niveau duquel un deuxième traitement complémentaire est réalisé préalablement à l'injection de la deuxième partie de pièce, le premier poste 101 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, le quatrième poste 104 au niveau duquel un deuxième traitement complémentaire est réalisé sur la première partie de pièce injectée, traitée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Bien entendu, si on inverse le sens de rotation du chargeur de transfert 7, le chargeur de transfert 7 est mobile en rotation entre la deuxième zone de transfert et/ou d'assemblage T2 au niveau de laquelle la deuxième partie de pièce est transférée, le quatrième poste 104 au niveau duquel un troisième traitement complémentaire est réalisé sur la deuxième partie de pièce injectée, la première zone de transfert et/ou d'assemblage T1 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

La huitième variante du troisième mode de réalisation diffère du troisième mode de réalisation en ce que :
- le premier chargeur comprend une troisième partie 5c et une quatrième partie 5d,
- le deuxième chargeur 6 comprend une troisième partie 6c et une quatrième partie 6d,
- le moule d'injection 1 comprend un cinquième poste 105 et un sixième poste 106, un septième poste 107 et un huitième poste 108.

Le reste des caractéristiques du moule d'injection 1, des premier et deuxième chargeurs 5, 6 et du chargeur de transfert 7 restent les mêmes que celles du troisième mode de réalisation.

Dans la huitième variante du troisième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 et le cinquième poste 105, le sixième poste 106, le septième poste 107 et le huitième poste 108 sont des postes de refroidissement ou de réchauffement ou de pose d'insert ou d'encliquetage ou de soudure miroir ou de soudure par joint surmoulé ou de pose d'un décor ou de marquage laser ou d'injection d'une autre matière.

Ainsi, le premier chargeur 5 est mobile en rotation entre le cinquième poste 105 au niveau duquel un premier traitement complémentaire est réalisé préalablement à l'injection de la première partie de pièce, le sixième poste 106 au niveau duquel un deuxième traitement complémentaire est réalisé préalablement à l'injection de la première partie de pièce, le premier poste 101 au niveau duquel la première partie de pièce est injectée et la première zone de transfert et/ou d'assemblage T1 au niveau de laquelle la première partie de pièce est transférée sur le chargeur de transfert 7.

Le deuxième chargeur 6 est mobile en rotation entre le septième poste 107 au niveau duquel un premier traitement complémentaire est réalisé préalablement à l'injection de la deuxième partie de pièce, le huitième poste 108 au niveau duquel un deuxième traitement complémentaire est réalisé préalablement à l'injection de la deuxième partie de pièce, le deuxième poste 102 au niveau duquel la deuxième partie de pièce est injectée et la deuxième zone de transfert et/ou d'assemblage T2 au niveau de laquelle la première partie de pièce et la deuxième partie de pièce sont assemblées.

Le chargeur de transfert 7 est mobile en rotation entre la première zone de transfert et/ou d'assemblage T1, le quatrième poste 104 au niveau duquel un troisième traitement complémentaire est réalisé sur la première partie de pièce injectée, traitée et transférée, la deuxième zone de transfert et/ou d'assemblage T2 au niveau de laquelle la première partie de pièce et la deuxième partie de pièce sont assemblées pour former une pièce finie et le troisième poste 103 au niveau duquel la pièce finie est éjectée.

Bien entendu, si on inverse le sens de rotation du chargeur de transfert 7, le chargeur de transfert 7 est mobile en rotation entre la deuxième zone de transfert et/ou d'assemblage T2 au niveau de laquelle la deuxième partie de pièce est transférée, le quatrième poste 104 au niveau duquel un troisième traitement complémentaire est réalisé sur la deuxième partie de pièce injectée, la première zone de transfert et/ou d'assemblage T1 au niveau de laquelle la première partie de pièce et la deuxième partie de pièce sont assemblées pour former une pièce finie et le troisième poste 103 au niveau duquel la pièce finie est éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation.

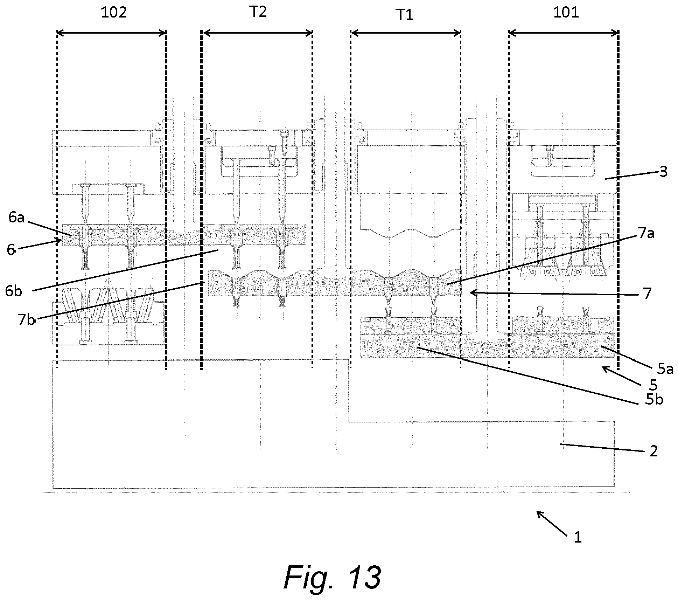

La neuvième variante du troisième mode de réalisation illustrée aux figures 12 et 13, diffère du troisième mode de réalisation en ce que les axes de rotation et de translation du premier chargeur 5 et du chargeur de transfert 7 sont alignés sur l'axe longitudinal X-X du moule d'injection 1 et les axes de rotation et de translation du deuxième chargeur 6 et du chargeur de transfert 7 sont alignés sur un axe Y-Y sécant, préférentiellement perpendiculaire, à l'axe longitudinal X-X du moule d'injection 1 et en ce que le quatrième poste 104 est un poste d'injection d'une troisième partie de pièce.

Le reste des caractéristiques du moule d'injection 1, des premier et deuxième chargeurs 5, 6 et du chargeur de transfert 7 restent les mêmes que celles du troisième mode de réalisation.

Dans la neuvième variante du troisième mode de réalisation, le premier poste 101 est un poste d'injection d'une première partie de pièce, le deuxième poste 102 est un poste d'injection d'une deuxième partie de pièce, le troisième poste 103 est un poste d'éjection et le quatrième poste 104 est un poste d'injection d'une troisième partie de pièce.

Ainsi, pour former une pièce par un procédé d'injection mis en oeuvre par le moule d'injection 1 selon la neuvième variante du troisième mode de réalisation, on injecte au niveau du premier poste 101 une première partie de pièce dans une empreinte de moulage 9 du premier chargeur 5, on injecte simultanément ou légèrement en différé une deuxième partie de pièce dans une empreinte de moulage 10 du deuxième chargeur 6 au niveau du deuxième poste 102 et on injecte simultanément ou légèrement en différé une troisième partie de pièce dans une empreinte de transfert 11 du chargeur de transfert 7 au niveau du quatrième poste 104.

Puis, le premier chargeur 5 et le deuxième chargeur 6 effectue une rotation de sorte que la première partie 5a du premier chargeur 5 portant la première partie de pièce injectée soit positionnée au niveau de la première zone de transfert et/ou d'assemblage T1 et que la première partie 6a du deuxième chargeur 6 portant la deuxième partie de pièce injectée soit positionnée au niveau de la deuxième zone de transfert et/ou d'assemblage T2.

Le chargeur de transfert 7 effectue alors une rotation de sorte que l'empreinte de transfert 11, dans laquelle la troisième partie de pièce injectée au troisième poste d'injection est agencée, soit positionnée en regard de l'empreinte de moulage 9 du premier chargeur 5 dans laquelle la première partie de pièce est agencée, au niveau de la première zone de transfert et/ou d'assemblage T1. La troisième partie de pièce et la première partie de pièce sont assemblées au niveau de ladite première zone de transfert et/ou d'assemblage T1, dans l'empreinte de transfert 11.

Puis, le chargeur de transfert 7 effectue une nouvelle rotation de sorte que l'empreinte de transfert 11 contenant la préforme issue de l'assemblage de la troisième partie de pièce et de la première partie de pièce, soit en regard de l'empreinte de moulage 10 du deuxième chargeur 6 contenant la deuxième partie de pièce est positionnée au niveau de la deuxième zone de transfert et/ou d'assemblage T2. La préforme et la deuxième partie de pièce sont assemblées au niveau de ladite deuxième zone de transfert et/ou d'assemblage T2, afin de former une pièce finie.

Puis le chargeur de transfert 7 effectue une rotation de sorte que l'empreinte de transfert 11 portant la pièce finie soit positionnée au niveau du troisième poste 103 afin d'être éjectée.

Des alternatives sont possibles notamment par l'interversion des postes au niveau desquels les premier 5 et deuxième 6 chargeur se positionnent lors de leur rotation. Pour comprendre le fonctionnement de ces alternatives, il faut se référer aux alternatives et variantes développées pour le premier mode de réalisation et le deuxième mode de réalisation et troisième mode de réalisation.

Bien entendu, lorsque les chargeurs comprennent quatre parties une rotation entre deux postes successifs correspond à un quart de tour, lorsque chargeurs comprennent trois parties, une rotation entre deux postes successifs correspond à un tiers de tour, lorsque les chargeurs comprennent deux parties, une rotation correspond à un demi tour.

Bien entendu, tous les procédés décrit ne concernaient que la formation d'une seule pièce pour plus de compréhension de l'invention mais le moule d'injection 1 selon l'invention réalise la formation de plusieurs pièces en simultanée chacune avec un cycle de production décalé.

Bien entendu, chaque partie de chargeur peut comprendre une ou plusieurs empreintes.

Bien entendu, les chargeurs peuvent comprendre plus de deux parties et ne sont pas limités à un maximum de quatre parties, ils peuvent en comprendre plus de quatre.

Bien entendu, le moule d'injection 1 selon l'invention peut comprendre autant de postes que nécessaire, le nombre de postes de travail n'est pas limité aux exemples décrits ci-avant.

Bien entendu, le moule d'injection 1 selon l'invention peut comprendre autant de chargeurs que nécessaire, le nombre de chargeurs n'est pas limité aux exemples décrits ci-avant.

## Revendications

1. Moule d'injection (1) comprenant :
- au moins un premier poste (101) pour l'injection d'une première partie de pièce,
- au moins un deuxième poste (102) pour l'injection d'une deuxième partie de pièce,
- un premier chargeur (5) comportant au moins une première empreinte (9) de moulage, ledit premier chargeur (5) étant mobile au moins en rotation entre le premier poste (101) et une première zone de transfert et/ou d'assemblage (T1),
- un deuxième chargeur (6) comportant au moins une première empreinte de moulage (10), ledit deuxième chargeur (6) étant mobile au moins en rotation entre le deuxième poste (102) et une deuxième zone de transfert et/ou d'assemblage (T2),
**caractérisé en ce que** le moule d'injection (1) comprend au moins un chargeur de transfert (7), mobile au moins en rotation entre la première zone de transfert et/ou d'assemblage (T1) et la deuxième zone de transfert et/ou d'assemblage (T2), ledit chargeur de transfert (7) étant configuré pour transférer la première partie de pièce du premier chargeur (5) sur le deuxième chargeur (6) et/ou ledit chargeur de transfert (7) étant configuré pour transférer la deuxième partie de pièce du deuxième chargeur (6) sur le premier chargeur (5).

2. Moule d'injection selon la revendication 1, dans lequel le chargeur de transfert (7) comprend au moins une première empreinte de transfert (11) conformée pour s'appairer dans la première zone de transfert et/ou d'assemblage (T1) avec la au moins une empreinte de moulage (9) du premier chargeur (5) de sorte à transférer la première partie de pièce du premier chargeur (5) sur le chargeur de transfert (7) ou inversement.

3. Moule d'injection selon la revendication 2, dans lequel la au moins une empreinte de transfert (11) du chargeur de transfert (7) est conformée pour s'appairer dans la deuxième zone de transfert et/ou d'assemblage (T2) avec la au moins une empreinte de moulage (10) du deuxième chargeur (6) de sorte à transférer la deuxième partie de pièce du chargeur de transfert (7) sur le deuxième chargeur (6) ou inversement.

4. Moule d'injection selon l'une quelconque des revendications 1 à 3, comprenant une première partie de moule (2) et une deuxième partie de moule (3) opposée à la première partie de moule (2), le premier chargeur (5), le deuxième chargeur (6) et le chargeur de transfert (7) étant agencés entre les première (2) et deuxième (3) partie de moule, et préférentiellement le chargeur de transfert (7) étant positionné entre le premier chargeur (5) et le deuxième chargeur (6).

5. Moule d'injection selon la revendication 4, dans lequel le chargeur de transfert (7) est agencé en retrait par rapport à l'axe longitudinal X-X du moule d'injection (1) et par rapport au premier chargeur (5) et au deuxième chargeur (6), en direction de la première partie de moule (2) du moule d'injection (1).

6. Moule d'injection selon l'une quelconque des revendications 1 à 4, dans lequel le chargeur de transfert (7) est agencé en retrait par rapport à l'axe longitudinal X-X du moule d'injection (1) et par rapport au premier chargeur (5) et au deuxième chargeur (6), en direction de la deuxième partie de moule (3) du moule d'injection (1).

7. Moule d'injection selon l'une quelconque des revendications 1 à 6, dans lequel le premier chargeur (5) comprend une pluralité d'empreintes de moulage (9) et/ou le deuxième chargeur (6) comprend une pluralité d'empreintes de moulage (10).

8. Moule d'injection selon l'une quelconque des revendications précédentes, comprenant au moins un poste d'éjection et/ou de refroidissement et/ou au moins un poste de réchauffement et/ou au moins un poste de pose d'insert et/ou au moins un poste d'encliquetage et/ou au moins un poste de soudure miroir et/ou au moins un poste de soudure par joint surmoulé et/ou au moins un poste de pose d'un décor et/ou au moins un poste de marquage laser.

9. Procédé d'injection mis en oeuvre par un moule d'injection selon l'une quelconque des revendications précédentes, ledit procédé d'injection comprenant au moins les étapes suivantes :
- injection d'une première partie de pièce dans une empreinte de moulage (9) d'une première partie (5a) du premier chargeur (5) au niveau d'un premier poste (101),
- injection d'une deuxième partie de pièce dans une empreinte de moulage (10) d'une première partie (6a) du deuxième chargeur (6) au niveau d'un deuxième poste (102),
- rotation du premier chargeur (5) de sorte que la première partie (5a) du premier chargeur (5) portant la première partie de pièce injectée, soit positionnée au niveau de la première zone de transfert et/ou d'assemblage (T1),
- rotation du deuxième chargeur (6) de sorte que la première partie (6a) du deuxième chargeur (6), portant la deuxième partie de pièce injectée, soit positionnée au niveau de la deuxième zone de transfert et/ou d'assemblage (T2),
- transfert de la première partie de pièce dans une empreinte de transfert (11) au niveau de la première zone de transfert et/ou d'assemblage (T1) ou transfert de la deuxième partie de pièce dans une empreinte de transfert (11) au niveau de la deuxième zone de transfert et/ou d'assemblage (T2),
- rotation du chargeur de transfert (7) de sorte que l'empreinte de transfert (11) dans laquelle est positionnée la première partie de pièce soit en regard, au niveau de la deuxième zone de transfert et/ou d'assemblage (T2), de l'empreinte de moulage (10) de la première partie (6a) du deuxième chargeur (6) dans laquelle est positionnée la deuxième partie de pièce, ou de sorte que l'empreinte de transfert (11) dans laquelle est positionnée la deuxième partie de pièce soit en regard, au niveau de la première zone de transfert et/ou d'assemblage (T1), de l'empreinte de moulage (9) de la première partie (5a) du premier chargeur (5) dans laquelle est positionnée la première partie de pièce,
- assemblage de la première partie de pièce avec la deuxième partie de pièce,
- éjection de la pièce finie issue de l'assemblage de la première partie de pièce avec la deuxième partie de pièce.

10. Procédé d'injection selon la revendication 9, dans lequel les étapes d'injection de la première partie de pièce et de la deuxième partie de pièce sont réalisées simultanément et/ou les étapes de rotation des premier (5) et deuxième (6) chargeurs sont réalisées simultanément.

## Patentansprüche

1. Spritzgussform (1), umfassend:
- mindestens eine erste Station (101) für das Spritzgießen eines ersten Werkstückteils,
- mindestens eine zweite Station (102) für das Spritzgießen eines zweiten Werkstückteils,
- einen ersten Lader (5), der mindestens einen ersten Formgebungshohlraum (9) umfasst, wobei der erste Lader (5) mindestens drehend zwischen der ersten Station (101) und einer ersten Transfer- und/oder Montagezone (T1) beweglich ist,
- einen zweiten Lader (6), der mindestens einen ersten Formgebungshohlraum (10) umfasst, wobei der zweite Lader (6) mindestens drehend zwischen der zweiten Station (102) und einer zweiten Transfer- und/oder Montagezone (T2) beweglich ist,
**dadurch gekennzeichnet, dass** die Spritzgussform (1) mindestens einen Transferlader (7) umfasst, der mindestens drehend zwischen der ersten Transfer- und/oder Montagezone (T1) und der zweiten Transfer- und/oder Montagezone (T2) beweglich ist, wobei der Transferlader (7) dafür konfiguriert ist, den ersten Werkstückteil vom ersten Lader (5) auf den zweiten Lader (6) zu transferieren, und/oder wobei der Transferlader (7) dafür konfiguriert ist, den zweiten Werkstückteil vom zweiten Lader (6) auf den ersten Lader (5) zu transferieren.

2. Spritzgussform nach Anspruch 1, wobei der Transferlader (7) mindestens einen ersten Transferhohlraum (11) umfasst, der dafür ausgebildet ist, sich in der ersten Transfer- und/oder Montagezone (T1) mit dem mindestens einen Formgebungshohlraum (9) des ersten Laders (5) derart zu paaren, dass der erste Werkstückteil vom ersten Lader (5) auf den auf den Transferlader (7), oder umgekehrt, transferiert wird.

3. Spritzgussform nach Anspruch 2, wobei der mindestens eine Transferhohlraum (11) des Transferladers (7) dafür ausgebildet ist, sich in der zweiten Transfer- und/oder Montagezone (T2) derart mit dem mindestens einen Formgebungshohlraum (10) des zweiten Laders (6) zu paaren, dass der zweite Werkstückteil vom Transferlader (7) auf den zweiten Lader (6), oder umgekehrt, transferiert wird.

4. Spritzgussform nach einem der Ansprüche 1 bis 3, die einen ersten Formteil (2) und einen zweiten Formteil (3) umfasst, der dem ersten Formteil (2) gegenüberliegt, wobei der erste Lader (5), der zweite Lader (6) und der Transferlader (7) zwischen dem ersten (2) und zweiten (3) Formteil angeordnet sind, und wobei der Transferlader (7) vorzugsweise zwischen dem ersten Lader (5) und dem zweiten Lader (6) positioniert ist.

5. Spritzgussform nach Anspruch 4, wobei der Transferlader (7) in Bezug auf die Längsachse X-X der Spritzgussform (1) und in Bezug auf den ersten Lader (5) und auf den zweiten Lader (6) in Richtung des ersten Formteils (2) der Spritzgussform (1) zurückgesetzt angeordnet ist.

6. Spritzgussform nach einem der Ansprüche 1 bis 4, wobei der Transferlader (7) in Bezug auf die Längsachse X-X der Spritzgussform (1) und in Bezug auf den ersten Lader (5) und auf den zweiten Lader (6) in Richtung des zweiten Formteils (3) der Spritzgussform (1) zurückgesetzt angeordnet ist.

7. Spritzgussform nach einem der Ansprüche 1 bis 6, wobei der erste Lader (5) eine Vielzahl von Formgebungshohlräumen (9) umfasst, und/oder der zweite Lader (6) eine Vielzahl von Formgebungshohlräumen (10) umfasst.

8. Spritzgussform nach einem der vorstehenden Ansprüche, die mindestens eine Auswurf- und/oder Kühlstation und/oder mindestens eine Heizstation und/oder mindestens eine Station um Heizeinsatz anzubringen und/oder mindestens eine Verrastungsstation und/oder mindestens eine Spiegelschweißstation und/oder mindestens eine Station zum Schweißen durch überformte Naht und/oder mindestens eine Station zum Anbringen eines Dekors und/oder mindestens eine Lasermarkierstation umfasst.

9. Spritzgussverfahren, das von einer Spritzgussform nach einem der vorstehenden Ansprüche umgesetzt wird, wobei das Spritzgussverfahren mindestens die folgenden Schritte umfasst:
- Spritzgießen eines ersten Werkstückteils in einem Formgebungshohlraum (9) eines ersten Teils (5a) des ersten Laders (5) im Bereich einer ersten Station (101),
- Spritzgießen eines zweiten Werkstückteils in einem Formgebungshohlraum (10) eines ersten Teils (6a) des zweiten Laders (6) im Bereich einer zweiten Station (102),
- Drehen des ersten Laders (5) derart, dass der erste Teil (5a) des ersten Laders (5), der den ersten spritzgegossenen Werkstückteil trägt, im Bereich der ersten Transfer- und/oder Montagezone (T1) positioniert wird,
- Drehen des zweiten Laders (6) derart, dass der erste Teil (6a) des zweiten Laders (6), der den zweiten spritzgegossenen Werkstückteil trägt, im Bereich der zweiten Transfer- und/oder Montagezone (T2) positioniert wird,
- Transfer des ersten Werkstückteils in einen Transferhohlraum (11) im Bereich der ersten Transfer- und/oder Montagezone (T1), oder Transfer des zweiten Werkstückteils in einen Transferhohlraum (11) im Bereich der zweiten Transfer- und/oder Montagezone (T2),
- Drehen des Transferladers (7) derart, dass der Transferhohlraum (11), in dem der erste Werkstückteil positioniert ist, im Bereich der zweiten Transfer- und/oder Montagezone (T2) dem Formgebungshohlraum (10) des ersten Teils (6a) des zweiten Laders (6), in dem der zweite Werkstückteil positioniert ist, zugewandt ist, oder derart, dass der Transferhohlraum (11), in dem der zweite Werkstückteil positioniert ist, im Bereich der ersten Transfer- und/oder Montagezone (T1) dem Formgebungshohlraum (9) des ersten Teils (5a) des ersten Laders (5), in dem der erste Werkstückteil positioniert ist, zugewandt ist,
- Zusammenfügen des ersten Werkstückteils mit dem zweiten Werkstückteil,
- Auswerfen des aus dem Zusammenfügen des ersten Werkstückteils mit dem zweiten Werkstückteil hervorgegangenen fertigen Werkstücks.

10. Spritzgussverfahren nach Anspruch 9, wobei die Schritte des Spritzgießens des ersten Werkstückteils und des zweiten Werkstückteils gleichzeitig ausgeführt werden, und/oder die Schritte des Drehens des ersten (5) und zweiten (6) Laders gleichzeitig ausgeführt werden.

## Claims

1. An injection mold (1) comprising:
- at least a first station (101) for injecting a first piece part,
- at least a second station (102) for injecting a second piece part,
- a first loader (5) including at least a first molding cavity (9), said first loader (5) being movable at least in rotation between the first station (101) and a first transfer and/or assembly area (T1),
- a second loader (6) including at least a first molding cavity (10), said second loader (6) being movable at least in rotation between the second station (102) and a second transfer and/or assembly area (T2),
**characterized in that** the injection mold (1) comprises at least one transfer loader (7), movable at least in rotation between the first transfer and/or assembly area (T1) and the second transfer and/or assembly area (T2), said transfer loader (7) being configured to transfer the first piece part of the first loader (5) on the second loader (6) and/or said transfer loader (7) being configured to transfer the second piece part of the second loader (6) on the first loader (5).

2. The injection mold according to claim 1, wherein the transfer loader (7) comprises at least a first transfer cavity (11) shaped to be paired, in the first transfer and/or assembly area (T1), with the at least one molding cavity (9) of the first loader (5) so as to transfer the first piece part of the first loader (5) on the transfer loader (7) or vice versa.

3. The injection mold according to claim 2, wherein the at least one transfer cavity (11) of the transfer loader (7) is shaped to be paired, in the second transfer and/or assembly area (T2), with the at last one molding cavity (10) of the second loader (6) so as to transfer the second piece part of the transfer loader (7) on the second loader (6) or vice versa.

4. The injection mold according to any one of claims 1 to 3, comprising a first mold part (2) and a second mold part (3) opposite the first mold part (2), the first loader (5), the second loader (6) and the transfer loader (7) being arranged between the first (2) and second (3) mold part, and preferably the transfer loader (7) being positioned between the first loader (5) and the second loader (6).

5. The injection mold according to claim 4, wherein the transfer loader (7) is arranged recessed relative to the longitudinal axis X-X of the injection mold (1) and relative to the first loader (5) and to the second loader (6), towards the first mold part (2) of the injection mold (1).

6. The injection mold according to any one of claims 1 to 4, wherein the transfer loader (7) is arranged recessed relative to the longitudinal axis X-X of the injection mold (1) and relative to the first loader (5) and to the second loader (6), towards the second mold part (3) of the injection mold (1).

7. The injection mold according to any one of claims 1 to 6, wherein the first loader (5) comprises a plurality of molding cavities (9) and/or the second loader (6) comprises a plurality of molding cavities (10).

8. The injection mold according to any one of the preceding claims, comprising at least one ejection and/or cooling station and/or at least one heating station and/or at least one insert laying station and/or at least one ratchet station and/or at least one mirror welding station and/or at least one welding station by overmolded seal and/or at least one decoration laying station and/or at least one laser marking station.

9. An injection method implemented by an injection mold according to any one of the preceding claims, said injection method comprising at least the following steps:
- injecting a first piece part into a molding cavity (9) of a first part (5a) of the first loader (5) at a first station (101),
- injecting a second piece part into a molding cavity (10) of a first part (6a) of the second loader (6) at a second station (102),
- rotating the first loader (5) so that the first part (5a) of the first loader (5) carrying the first injected piece part, is positioned at the first transfer and/or assembly area (T1),
- rotating the second loader (6) so that the first part (6a) of the second loader (6), carrying the second injected piece part, is positioned at the second transfer and/or assembly area (T2),
- transferring the first piece part into a transfer cavity (11) at the first transfer and/or assembly area (T1) or transferring the second piece part into a transfer cavity (11) at the second transfer and/or assembly area (T2),
- rotating the transfer loader (7) so that the transfer cavity (11) in which is positioned the first piece part is facing, at the second transfer and/or assembly area (T2), the molding cavity (10) of the first part (6a) of the second loader (6) in which is positioned the second piece part, or so that the transfer cavity (11) in which is positioned the second piece part is facing, at the first transfer and/or assembly area (T1), the molding cavity (9) of the first part (5a) of the first loader (5) in which is positioned the first piece part,
- assembling the first piece part with the second piece part,
- ejecting the finished part resulting from the assembly of the first piece part with the second piece part.

10. The injection method according to claim 9, wherein the steps of injecting the first piece part and the second piece part are performed simultaneously and/or the steps of rotating the first (5) and second (6) loaders are performed simultaneously.
